# EUROPÄISCHE PATENTSCHRIFT

(11) **EP 4 385 659 B1**
(45) Veröffentlichungstag und Bekanntmachung des Hinweises auf die Patenterteilung: **29.04.2026**
(21) Anmeldenummer: 23214463.4
(22) Anmeldetag: 05.12.2023
(51) Int. Cl.: B23B 31/107, B25B 1/08, B25B 5/14, B25B 5/08, B25B 1/20, B23Q 1/00

(54) **SPANNVORRICHTUNG**
CLAMPING DEVICE
DISPOSITIF DE SERRAGE

(30) Priorität: 12.12.2022 DE 102022132954
(43) Veröffentlichungstag der Anmeldung: 19.06.2024
(73) Patentinhaber: Andreas Maier GmbH & Co. KG, 70734 Fellbach (DE)
(72) Erfinder: Dietterle, Martin, 73575 Leinzell (DE); Geier, Jessica, 71576 Burgstetten (DE); Kommode, Steffen, 73635 Rudersberg (DE); Zimmermann, Rainer, 73732 Esslingen (DE); Trebes, Herbert, 73614 Schorndorf (DE)
(74) Vertreter: Hoeger, Stellrecht & Partner Patentanwälte mbB

(56) Entgegenhaltungen:
- DE-A1- 10 118 808

## Beschreibung

Die vorliegende Erfindung betrifft eine Spannvorrichtung zum Einspannen eines an einem Werkstück oder an einem Werkstückträger angeordneten Spannbolzens, wobei die Spannvorrichtung Verriegelungselemente, einen Kolben zum Bewegen der Verriegelungselemente zu einer Längsmittelachse der Spannvorrichtung hin, ein erstes Gehäuseteil und ein zweites Gehäuseteil und eine Vorspannvorrichtung zum Spannen des Kolbens in eine Spannstellung des Kolbens umfasst.

Bei bekannten Spannvorrichtungen dieser Art umfasst die Vorspannvorrichtung Federelemente, welche direkt auf den Kolben der Spannvorrichtung einwirken, um denselben in die Spannstellung vorzuspannen.

Wenn eine besonders hohe Vorspannkraft auf den Kolben und von diesem auf die Verrieglungselemente der Spannvorrichtung übertragen werden soll, müssen daher Federelemente verwendet werden, die bei einer Verformung eine besonders hohe elastische Rückstellkraft erzeugen.

Die DE 101 18 808 A1 offenbart eine Spannvorrichtung gemäß dem Oberbegriff von Anspruch 1.

Der vorliegenden Erfindung liegt die Aufgabe zugrunde, eine Spannvorrichtung der eingangs genannten Art zu schaffen, welche es ermöglicht, auch ohne Verwendung größerer und stärkerer Federelemente eine höhere Vorspannkraft zu erzeugen, welche den Kolben in seine Spannstellung vorspannt.

Diese Aufgabe wird durch eine Spannvorrichtung nach Anspruch 1 gelöst.

Der vorliegenden Erfindung liegt das Konzept zugrunde, die Vorspannkraft der Federelemente nicht direkt auf den Kolben einwirken zu lassen, sondern zumindest einen Teil dieser Vorspannkraft über den Zwischenkolben und die Verstärkungselemente auf den Kolben zu übertragen.

Durch eine geeignete Wahl der Geometrie und der Anordnung der Verstärkungselemente relativ zu dem Zwischenkolben, dem Kolben und dem ersten Gehäuseteil der Spannvorrichtung wird dabei der Anteil der Federkraft, welcher über den Zwischenkolben und die Verstärkungselemente auf den Kolben übertragen wird, um einen Verstärkungsfaktor V gegenüber der Federkraft erhöht, mit welcher der Kolben beaufschlagt werden würde, wenn die Federelemente direkt auf den Kolben einwirken würden.

Vorzugsweise beträgt der Verstärkungsfaktor V mindestens 1,5, insbesondere mindestens 2,0, besonders bevorzugt mindestens 2,5.

Besonders günstig ist es, wenn im Wesentlichen die gesamte Federkraft nicht direkt auf den Kolben übertragen wird, sondern ausschließlich indirekt über den Zwischenkolben und die Verstärkungselemente auf den Kolben übertragen wird.

Ferner ist es besonders günstig, wenn der Zwischenkolben sich während des gesamten Übergangs der Spannvorrichtung von dem Freigabezustand in den Spannzustand in der gleichen Richtung wie der Kolben bewegt.

In diesem Fall bewegt der Zwischenkolben sich also zu keinem Zeitpunkt während des Übergangs der Spannvorrichtung von dem Freigabezustand in den Spannzustand in der der Bewegungsrichtung des Kolbens entgegengesetzten Richtung.

Die Bewegungsrichtung des Zwischenkolbens und/oder die Bewegungsrichtung des Kolbens verläuft vorzugsweise parallel zu der Längsmittelachse der Spannvorrichtung.

Die Verstärkungselemente bewegen sich bei der Bewegung des Kolbens von der Freigabestellung in die Spannstellung zumindest abschnittsweise parallel zur Bewegung des Kolbens mit.

Ferner ist es günstig, wenn die Verstärkungselemente sich bei der Bewegung des Kolbens von der Freigabestellung in die Spannstellung zumindest abschnittsweise parallel zu der Längsmittelsachse der Spannvorrichtung bewegen.

Ferner ist vorzugsweise vorgesehen, dass die Verstärkungselemente sich bei der Bewegung des Kolbens von der Freigabestellung in die Spannstellung zumindest abschnittsweise in einer Radialrichtung der Längsmittelachse der Spannvorrichtung bewegen.

Vorzugsweise in der letzten Phase der Bewegung des Kolbens von der Freigabestellung in die Spannstellung bewegen sich die Verstärkungselemente bei einer bevorzugten Ausgestaltung der Erfindung sowohl in der parallel zu der Längsmittelachse der Spannvorrichtung verlaufenden Axialrichtung der Spannvorrichtung als auch in der Radialrichtung der Längsmittelachse der Spannvorrichtung. In dieser Phase bewegen sich die Verstärkungselemente somit vorzugsweise schräg zu der Längsmittelachse der Spannvorrichtung und schräg zu der Radialrichtung der Längsmittelachse.

In der Spannstellung des Kolbens sind die Verstärkungselemente vorzugsweise zumindest teilweise in einer Ausnehmung an einer Umfangsfläche des ersten Gehäuseteils der Spannvorrichtung aufgenommen.

In der Freigabestellung des Kolbens liegen die Verstärkungselemente vorzugsweise an einem zylindrischen Abschnitt einer Umfangsfläche des ersten Gehäuseteils der Spannvorrichtung an.

Der zylindrische Abschnitt der Umfangsfläche des ersten Gehäuseteils ist vorzugsweise parallel zu der Längsmittelachse der Spannvorrichtung ausgerichtet.

Bei der Erfindung ist vorgesehen, dass die Verstärkungselemente zumindest zeitweise gleichzeitig an dem Zwischenkolben, an dem Kolben und an dem ersten Gehäuseteil anliegen.

Besonders günstig ist es, wenn die Verstärkungselemente zu jedem Zeitpunkt gleichzeitig an dem Zwischenkolben, an dem Kolben und an dem ersten Gehäuseteil anliegen.

Der Zwischenkolben ist vorzugsweise verschiebbar an dem Kolben geführt.

Die Führungsflächen des Kolbens, längs welcher der Zwischenkolben verschiebbar an dem Kolben geführt ist, sind vorzugsweise parallel zu der Längsmittelachse der Spannvorrichtung ausgerichtet, so dass keine parallel zur Längsmittelachse der Spannvorrichtung ausgerichtete Kraftkomponente von dem Zwischenkolben direkt auf den Kolben übertragen wird.

Der Zwischenkolben ist vorzugsweise zumindest zeitweise in der Axialrichtung der Spannvorrichtung von dem Kolben beabstandet.

Besonders günstig ist es, wenn der Zwischenkolben zumindest im Spannzustand der Spannvorrichtung in der Axialrichtung der Spannvorrichtung von dem Kolben beabstandet ist.

Die Axialrichtung der Spannvorrichtung verläuft parallel zu der Längsmittelachse der Spannvorrichtung.

Besonders günstig ist es, wenn der Zwischenkolben in jedem Zustand der Spannvorrichtung in der Axialrichtung der Spannvorrichtung von dem Kolben beabstandet ist.

Der Kolben weist vorzugsweise mindestens eine Durchtrittsöffnung auf, durch welche ein Betätigungsfluid durch den Kolben hindurch zu dem Zwischenkolben gelangen kann.

Das Betätigungsfluid dient dazu, den Kolben aus der Spannstellung herauszubewegen, um eine Bewegung der Verriegelungselemente von der Längsmittelachse der Spannvorrichtung weg zu ermöglichen und so beispielsweise einen zunächst an der Spannvorrichtung verriegelten Spannbolzen aus einer Spannbolzenaufnahme der Spannvorrichtung entnehmen zu können.

Vorzugsweise sind mehrere solcher Durchtrittsöffnungen, insbesondere drei oder mehr solcher Durchtrittsöffnungen, an dem Kolben vorgesehen, durch welche ein Betätigungsfluid durch den Kolben hindurch zu dem Zwischenkolben gelangen kann.

Bei einer bevorzugten Ausgestaltung der Erfindung ist vorgesehen, dass mindestens eines der Verstärkungselemente als eine Verstärkungskugel ausgebildet ist.

Vorzugsweise sind alle Verstärkungselemente als jeweils eine Verstärkungskugel ausgebildet.

Die Anzahl der Verstärkungselemente, mittels welcher zumindest ein Teil der Vorspannkraft von dem Zwischenkolben auf den Kolben übertragen wird, beträgt vorzugsweise mindestens zehn, insbesondere mindestens 15, besonders bevorzugt mindestens 20.

Die Verstärkungselemente sind vorzugsweise in einem Verstärkungselementeaufnahmeraum der Spannvorrichtung angeordnet.

Längs einer Umfangsrichtung des Verstärkungselementeaufnahmeraums sind die Verstärkungselemente vorzugsweise voneinander beabstandet.

Die Verstärkungselemente und der Zwischenkolben bilden zusammen eine Kraftverstärkungseinrichtung der Spannvorrichtung, mittels welcher die auf den Kolben einwirkende Federkraft um einen Faktor V verstärkt wird gegenüber der Federkraft, welche dieselben Federelemente bei direkter Einwirkung auf den Kolben auf den Kolben übertragen würden.

Besonders günstig ist es, wenn die Spannvorrichtung mindestens zehn, insbesondere mindestens 15, besonders bevorzugt mindestens 20, beispielsweise mindestens 26, Verstärkungselemente umfasst, welche längs einer Umfangsrichtung der Längsmittelachse der Spannvorrichtung aufeinander folgen.

Bei einer besonderen Ausgestaltung der Erfindung ist vorgesehen, dass die Spannvorrichtung einen Zuführpfad für ein Betätigungsfluid umfasst, durch welchen das Betätigungsfluid der dem Kolben abgewandten Seite des Zwischenkolbens zuführbar ist.

Auf diese Weise ist es möglich, durch Zufuhr eines unter Druck stehenden Betätigungsfluids auf die dem Kolben abgewandte Seite des Zwischenkolbens den Zwischenkolben mit einer die Federkraft der Federelemente übersteigenden Kraft zu beaufschlagen, beispielsweise um einen in einer Spannbolzenaufnahme der Spannvorrichtung angeordneten Spannbolzen nachzuspannen, wenn der Kolben sich bereits in der Spannstellung befindet.

Die Vorspannvorrichtung umfasst vorzugsweise mehrere Federelemente, welche längs einer Umfangsrichtung der Längsmittelachse der Spannvorrichtung aufeinander folgen.

Jeweils ein oder mehrere Federelemente können ein Federpaket bilden.

Beispielsweise kann vorgesehen sein, dass zwei oder mehr Federelemente jeweils zu einem Federpaket zusammengefasst sind.

Bei einer besonderen Ausgestaltung der Erfindung ist vorgesehen, dass mindestens eines der Verriegelungselemente der Spannvorrichtung als eine Verriegelungskugel ausgebildet ist.

Besonders günstig ist es, wenn alle Verriegelungselemente der Spannvorrichtung als jeweils eine Verriegelungskugel ausgebildet sind.

Alternativ hierzu kann vorgesehen sein, dass mindestens eines der Verriegelungselemente als ein Torus-Segment ausgebildet ist.

In diesem Fall ist es besonders günstig, wenn alle Verriegelungselemente der Spannvorrichtung als ein jeweils ein Torus-Segment ausgebildet sind.

Ferner kann vorgesehen sein, dass der Kolben und/oder der Zwischenkolben der Spannvorrichtung in einem Ruhezustand der Spannvorrichtung, in welchem kein Spannbolzen in einer Spannbolzenaufnahme der Spannvorrichtung angeordnet ist, in eine Ruhestellung bewegbar sind, in welcher der Kolben bzw. der Zwischenkolben weiter von der Freigabestellung entfernt ist als in der jeweiligen Spannstellung.

Beim Überführen des Kolbens und des Zwischenkolbens von der Spannstellung in die Freigabestellung wird eine von dem mit Druck beaufschlagten Betätigungsfluid auf den Kolben übertragene Öffnungskraft zumindest teilweise über die Verstärkungselemente auf den Zwischenkolben übertragen.

Bei der Bewegung des Kolbens und des Zwischenkolbens von der Spannstellung in die Freigabestellung werden die Verstärkungselemente vorzugsweise aus einer Ausnehmung an einer Umfangswand des ersten Gehäuseteils herausbewegt, worauf sie sich dann an einem zylindrischen Abschnitt der Umfangswand des ersten Gehäuseteils entlang bewegen, bis der Kolben und der Zwischenkolben in der Freigabestellung angelangt sind.

Das erste Gehäuseteil der Spannvorrichtung umfasst vorzugsweise eine Bodenplatte, an welcher sich Federelemente der Vorspannvorrichtung direkt oder indirekt abstützen.

Das zweite Gehäuseteil der Spannvorrichtung ist vorzugsweise als ein Gehäusedeckel der Spannvorrichtung ausgebildet, welcher eine mittige Ausnehmung aufweist, durch welchen der Spannbolzen in die Spannbolzenaufnahme der Spannvorrichtung gelangen kann.

Vorzugsweise ist vorgesehen, dass der Zwischenkolben mittels einer Verdrehungssicherungseinrichtung gegen eine Verdrehung relativ zu dem ersten Gehäuseteil (um die Längsmittelachse der Spannvorrichtung) gesichert ist.

Eine solche Verdrehungssicherungseinrichtung kann insbesondere einen Verdrehungssicherungsstift umfassen, welcher einerseits in eine an dem ersten Gehäuseteil der Spannvorrichtung ausgebildete Verdrehungssicherungsstiftaufnahme und andererseits in eine an dem Zwischenkolben ausgebildete Verdrehungssicherungsstiftaufnahme eingreift.

Ein solcher Verdrehungssicherungsstift kann beispielsweise als ein Zylinderstift ausgebildet sein.

Durch die unterschiedliche Neigung der Kontaktflächen, an welchen die Verstärkungselemente an dem Kolben, an dem Zwischenkolben und an dem ersten Gehäuseteil anliegen, gegenüber der Längsmittelachse der Spannvorrichtung, längs welcher der Kolben und der Zwischenkolben verschiebbar sind, wirkt bei der erfindungsgemäßen Spannvorrichtung bei gleichen Federkräften und gleichen Federwegen eine höhere Vorspannkraft auf den Kolben, und damit auch - über die Verriegelungselemente - auf den Spannbolzen, als bei bekannten Spanneinrichtungen ohne Kraftverstärkung.

Die Höhe der Kraftverstärkung V ergibt sich aus der Bedingung, dass die im Spannzustand der Spannvorrichtung auf die Verstärkungselemente von dem Kolben, von dem Zwischenkolben und von dem ersten Gehäuseteil ausgeübten Kräfte sich (vektoriell) zu Null addieren.

Weitere Merkmale und Vorteile der Erfindung sind Gegenstand der nachfolgenden Beschreibung und der zeichnerischen Darstellung von Ausführungsbeispielen.

In den Zeichnungen zeigen:

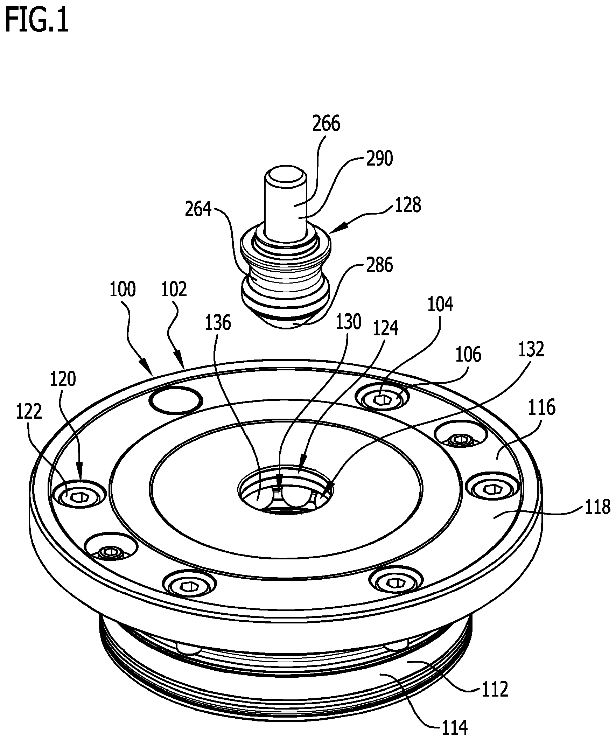

- Fig. 1: eine perspektivische Darstellung einer Spannvorrichtung in Form eines Spannzylinders, der als ein Einsteckmodul ausgebildet ist, und eines Spannbolzens, wobei Verriegelungselemente der Spannvorrichtung als Verriegelungskugeln ausgebildet sind;

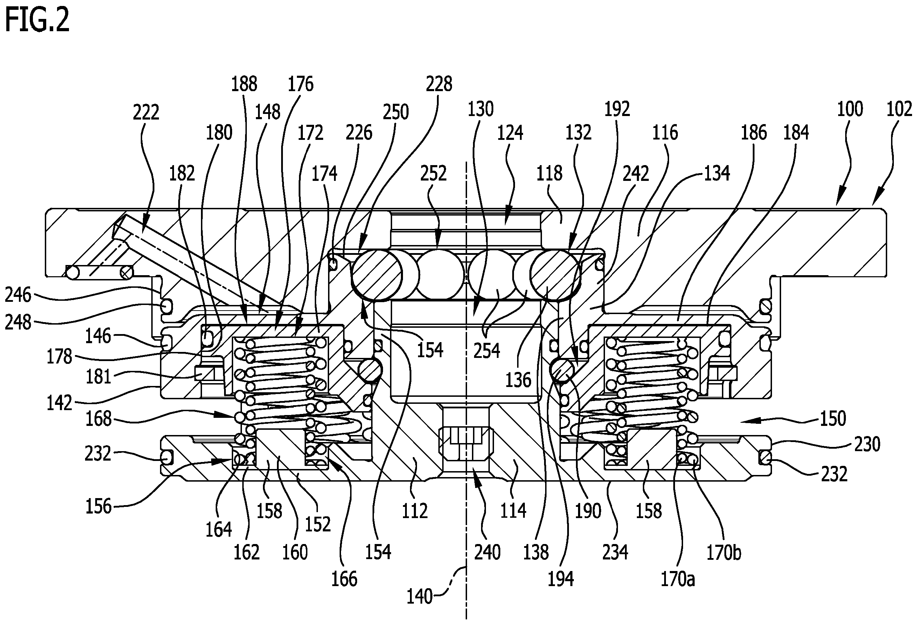

- Fig. 2: einen Längsschnitt durch die Spannvorrichtung aus Fig. 1, wobei ein Kolben der Spannvorrichtung sich in einer Ruhestellung des Kolbens befindet, welche der Kolben einnimmt, wenn kein Spannkolben in der Spannkolbenaufnahme der Spannvorrichtung angeordnet ist und der Kolben unter der Einwirkung der Vorspannvorrichtung gegen einen Gehäusedeckel der Spannvorrichtung gedrückt wird;

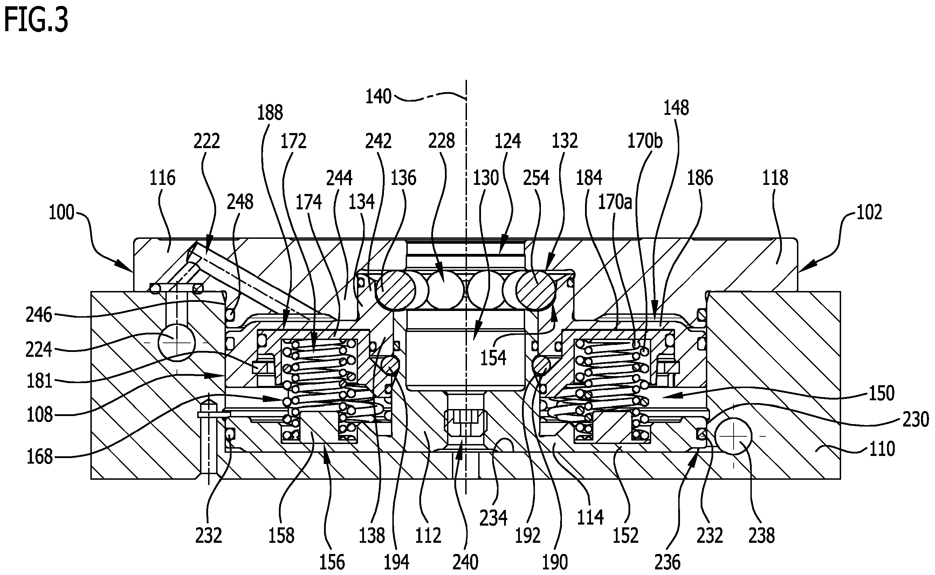

- Fig. 3: einen Längsschnitt durch die Spannvorrichtung aus den Fig. 1 und 2, die in eine Spannvorrichtungsaufnahme eines Maschinentisches eingesetzt ist, wobei der Kolben der Spannvorrichtung sich in seiner Ruhestellung befindet;

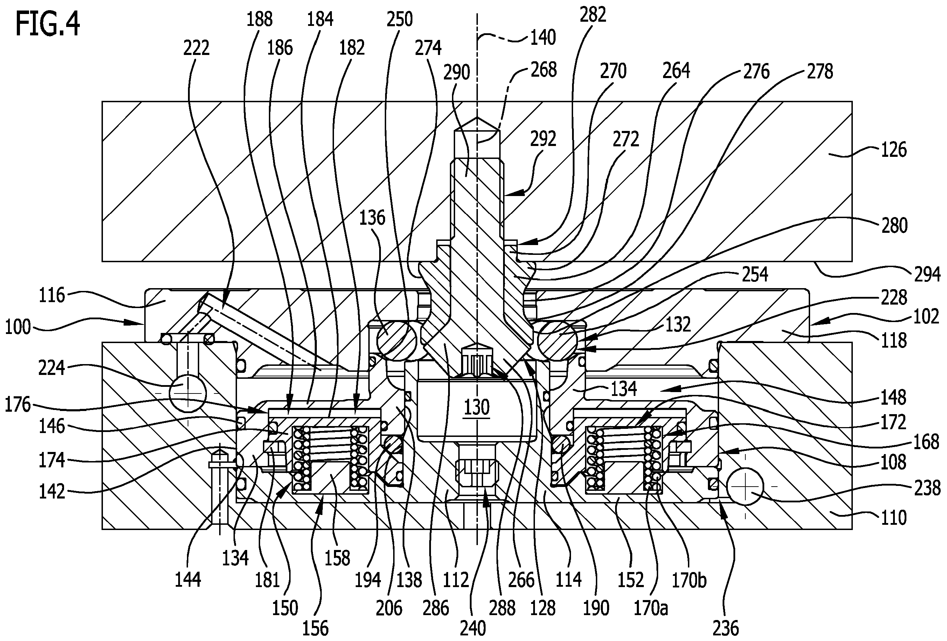

- Fig. 4: einen Längsschnitt durch die Spannvorrichtung aus den Fig. 1 bis 3, die in eine Spannvorrichtungsaufnahme eines Maschinentisches eingesetzt ist, und einen Spannbolzen, der an einem Werkstückträger angeordnet ist, wobei der Spannbolzen teilweise in eine Spannbolzenaufnahme der Spannvorrichtung eingreift, in einem Freigabezustand der Spannvorrichtung, in welchem der Spannbolzen in die Spannbolzenaufnahme der Spannvorrichtung einführbar ist und der Kolben der Spannvorrichtung sich in einer Freigabestellung befindet;

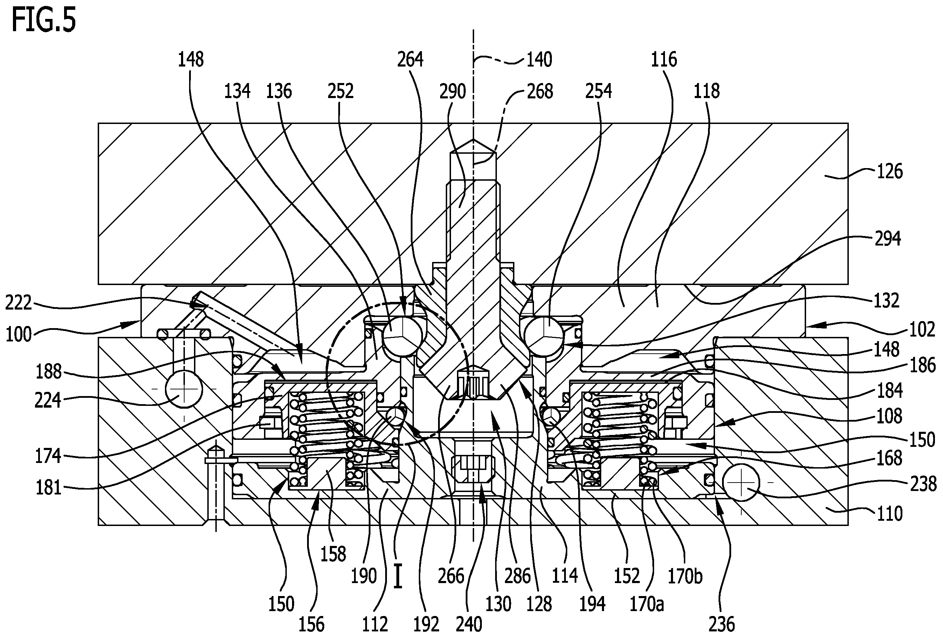

- Fig. 5: einen der Fig. 4 entsprechenden Längsschnitt durch die Spannvorrichtung, den Maschinentisch, den Spannbolzen und den Werkstückträger in einem Spannzustand der Spannvorrichtung, in welchem der Spannbolzen durch die Verriegelungselemente in der Spannbolzenaufnahme zurückgehalten wird und der Kolben der Spannvorrichtung sich in einer Spannstellung befindet;

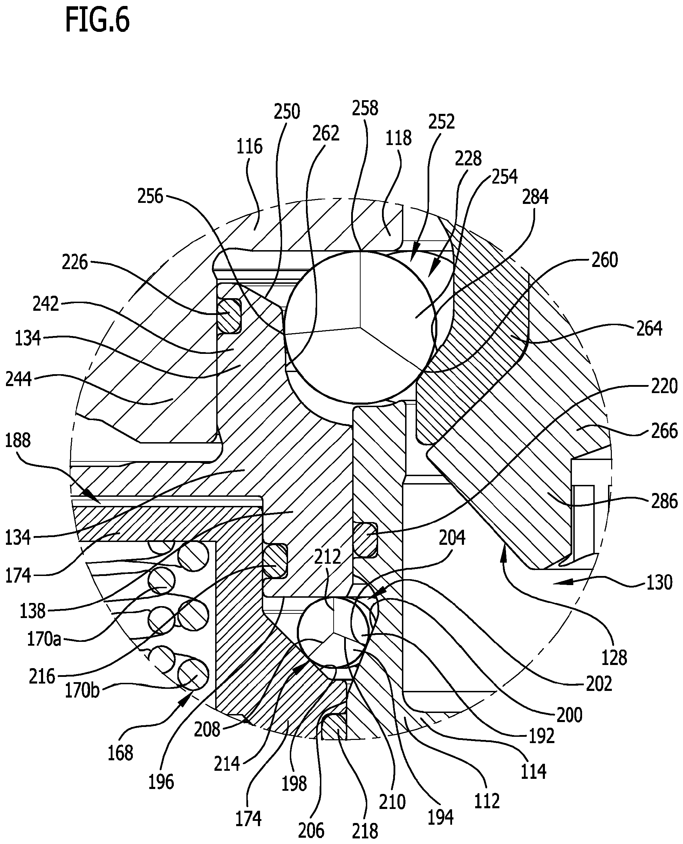

- Fig. 6: eine vergrößerte Darstellung des Bereichs I aus Fig. 5;

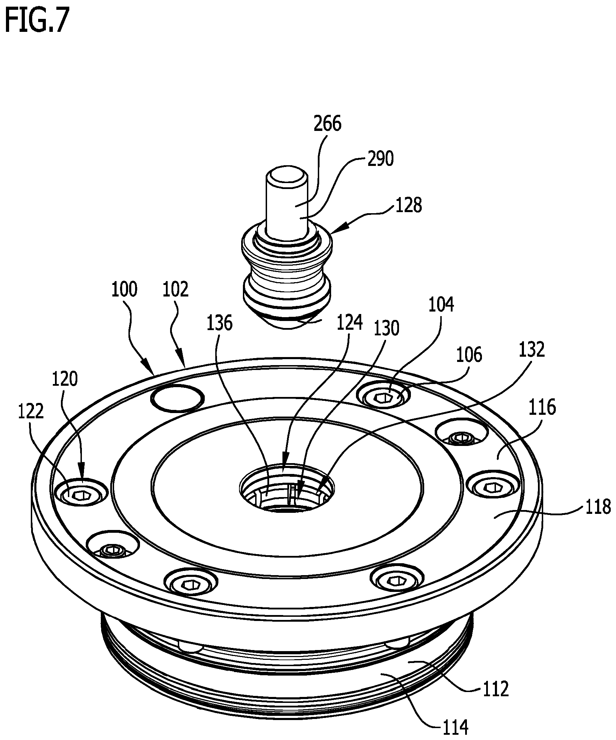

- Fig. 7: eine perspektivische Darstellung einer zweiten Ausführungsform einer Spannvorrichtung in Form eines Spannzylinders, der als ein Einsteckmodul ausgebildet ist, und eines Spannbolzens, wobei Verriegelungselemente der Spannvorrichtung als jeweils ein Torus-Segment ausgebildet sind;

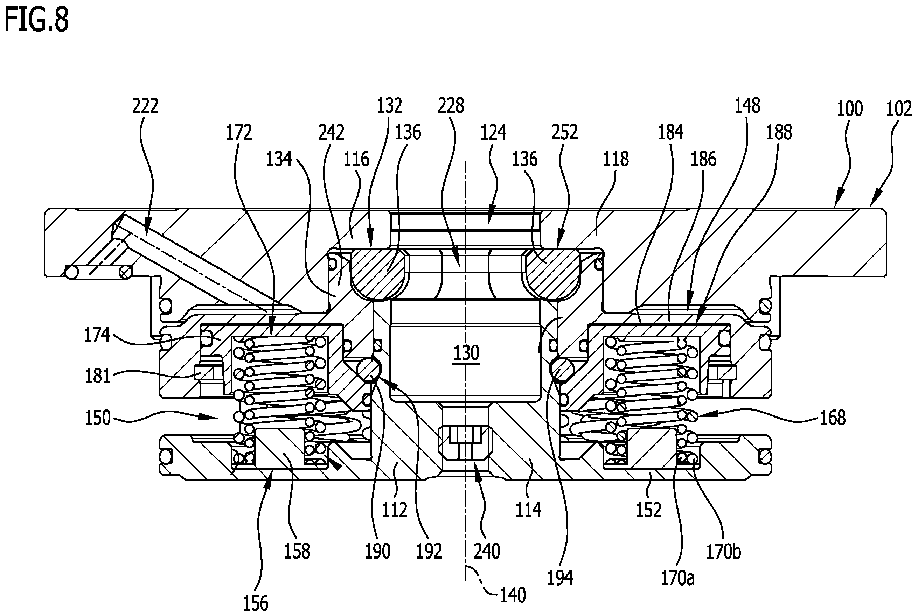

- Fig. 8: einen Längsschnitt durch die Spannvorrichtung aus Fig. 7, wobei der Kolben der Spannvorrichtung sich in seiner Ruhestellung befindet;

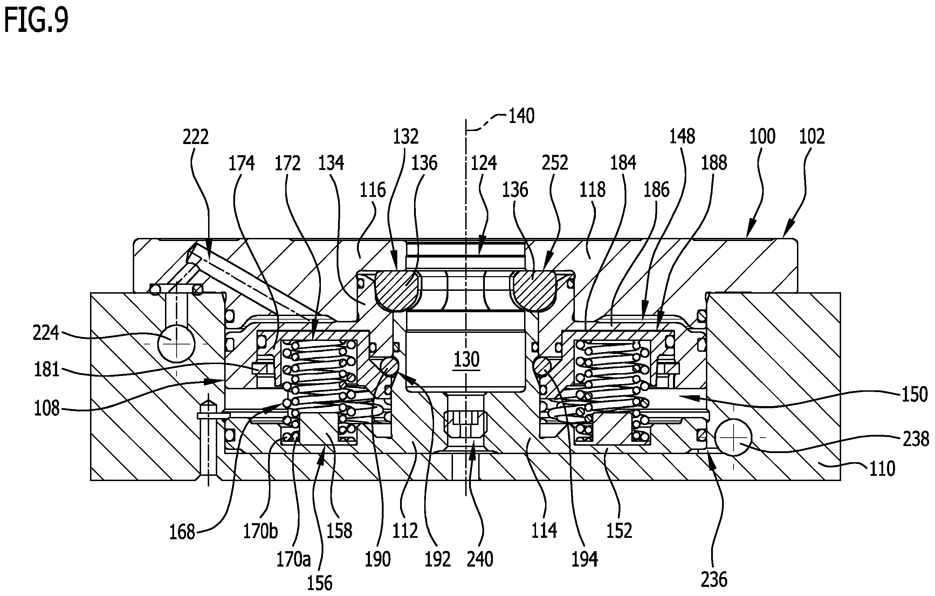

- Fig. 9: einen Längsschnitt durch die Spannvorrichtung aus den Fig. 7 und 8, die in eine Spannvorrichtungsaufnahme eines Maschinentisches eingesetzt ist, wobei der Kolben der Spannvorrichtung sich in der Ruhestellung befindet;

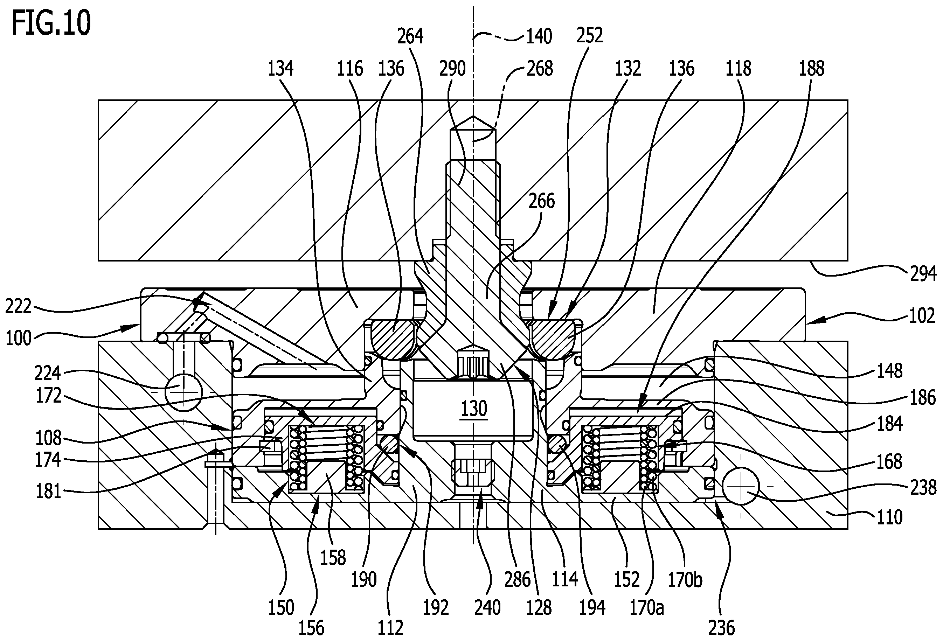

- Fig. 10: einen Längsschnitt durch die Spannvorrichtung aus den Fig. 7 bis 9, die in eine Spannvorrichtungsaufnahme eines Maschinentisches eingesetzt ist, und einen Spannbolzen, der an einem Werkstückträger angeordnet ist, wobei der Spannbolzen teilweise in eine Spannbolzenaufnahme der Spannvorrichtung eingreift, in einem Freigabezustand der Spannvorrichtung, in welchem der Spannbolzen in die Spannbolzenaufnahme der Spannvorrichtung einführbar ist und der Kolben der Spannvorrichtung sich in einer Freigabestellung befindet;

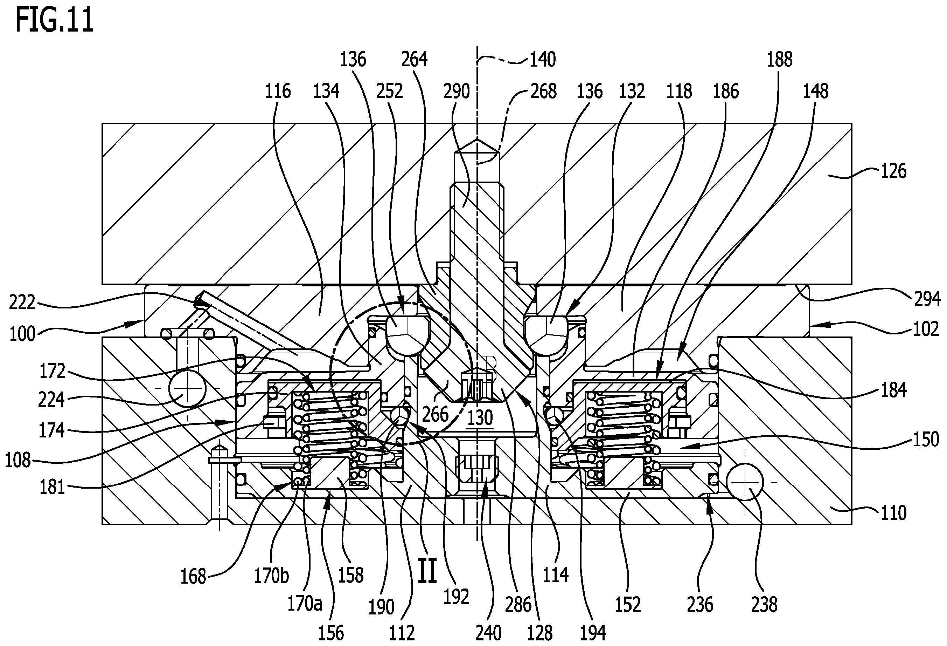

- Fig. 11: einen der Fig. 10 entsprechenden Längsschnitt durch die Spannvorrichtung, den Maschinentisch, den Spannbolzen und den Werkstückträger in einem Spannzustand der Spannvorrichtung, in welchem der Spannbolzen durch die Verriegelungselemente in der Spannbolzenaufnahme zurückgehalten wird und der Kolben der Spannvorrichtung sich in einer Spannstellung befindet;

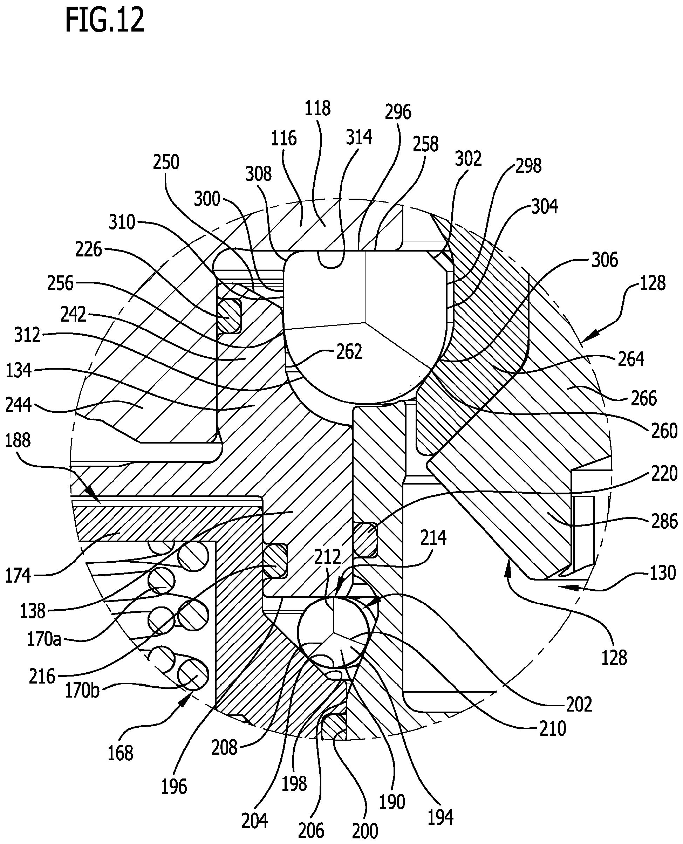

- Fig. 12: eine vergrößerte Darstellung des Bereichs II aus Fig. 11;

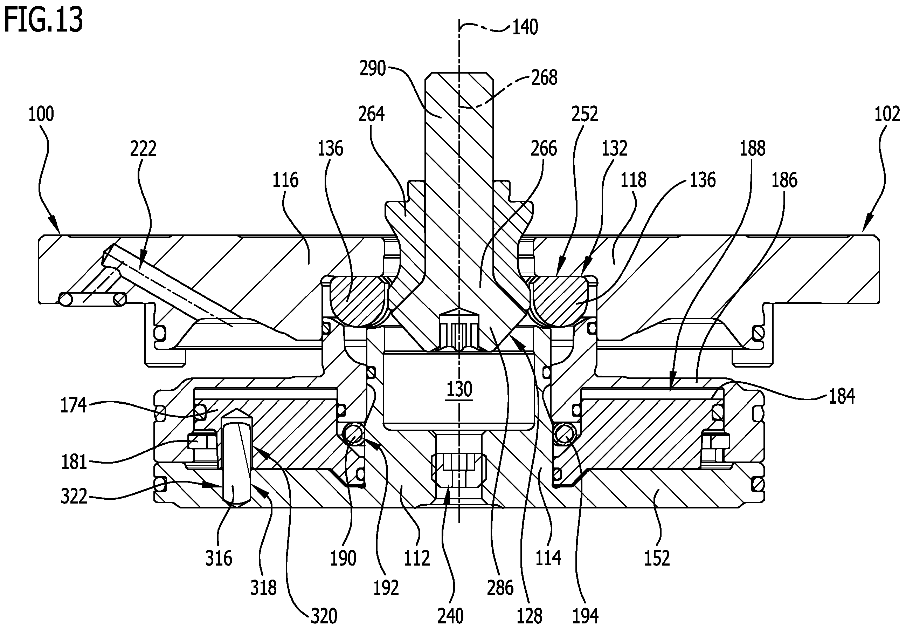

- Fig. 13: einen Längsschnitt durch die Spannvorrichtung aus den Fig. 7 bis 9 und einen Spannbolzen, wobei der Spannbolzen teilweise in eine Spannbolzenaufnahme der Spannvorrichtung eingreift, in einem Freigabezustand der Spannvorrichtung, in welchem der Spannbolzen in die Spannbolzenaufnahme der Spannvorrichtung einführbar ist und der Kolben der Spannvorrichtung sich in einer Freigabestellung befindet, wobei die Zeichenebene von Fig. 13 gegenüber der Zeichenebene von Fig. 10 so weit um die Längsmittelachse der Spannvorrichtung gedreht ist, dass der Längsschnitt durch die Spannvorrichtung in Fig. 13 zwischen Federpaketen der Spannvorrichtung durch einen Verdrehungssicherungsstift einer Verdrehungssicherungseinrichtung des Zwischenkolbens hindurch verläuft; und

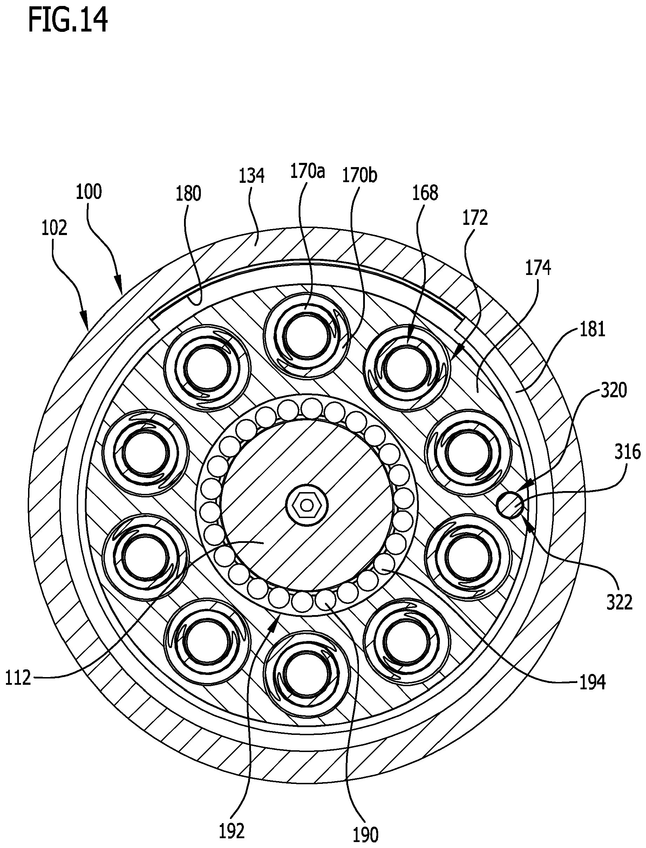

- Fig. 14: einen Querschnitt durch die Spannvorrichtung aus den Fig. 7 bis 9, wobei die Zeichenebene von Fig. 14 senkrecht zu der Längsmittelachse der Spannvorrichtung durch die Verstärkungselemente der Spannvorrichtung und durch den Verdrehungssicherungsstift der Verdrehungssicherungseinrichtung des Zwischenkolbens hindurch verläuft.

Gleiche oder funktional äquivalente Elemente sind in allen Figuren mit denselben Bezugszeichen bezeichnet.

Eine in den Fig. 1 bis 6 dargestellte erste Ausführungsform einer als Ganzes mit 100 bezeichneten Spannvorrichtung ist als ein Schnellspannmodul 102 ausgebildet, welches mittels Befestigungsmitteln 104, beispielsweise Schrauben 106, an einer Spannrichtungsaufnahme 108 eines Maschinentisches 110 oder einer Aufspannplatte befestigbar ist (siehe insbesondere die Fig. 1 und 3).

Die Spannvorrichtung 100 umfasst ein erstes Gehäuseteil 112, das vorzugsweise als ein Bodenteil 114 ausgebildet ist, und ein zweites Gehäuseteil 116, das vorzugsweise als ein Gehäusedeckel 118 ausgebildet ist.

Das zweite Gehäuseteil 116 weist gestufte Durchtrittsöffnungen 120 auf, welche jeweils einen Kopf 122 und einen dem Kopf 122 zugewandten Teil des Schaftes jeweils einer Schraube 106 aufnehmen.

Im montierten Zustand der Spannvorrichtung, welcher in den Fig. 4 bis 6 dargestellt ist, greifen die Schrauben 106 in hierzu komplementär ausgebildete (nicht dargestellte) Gewindebohrungen des Maschinentisches 110 ein, um die Spannvorrichtung 100 an dem Maschinentisch 110 zu fixieren.

Das zweite Gehäuseteil 116 weist ferner eine mittige Ausnehmung 124 auf, durch welche ein an einem Werkstückträger 126 oder unmittelbar an einem Werkstück festgelegter Spannbolzen 128 in eine Spannbolzenaufnahme 130 der Spannvorrichtung 100 einführbar ist.

In Fig. 4 ist ein Freigabezustand der Spannvorrichtung 100 dargestellt, in welchem der Spannbolzen 128 in die Spannbolzenaufnahme 130 einführbar oder aus der Spannbolzenaufnahme 130 entnehmbar ist.

In den Fig. 5 und 6 ist die Spannvorrichtung 100 in einem Spannzustand dargestellt, in welchem die Spannvorrichtung 100 den Spannbolzen 126 in der Spannbolzenaufnahme 128 zurückhält.

Zur Verriegelung des Spannbolzens 128 in der Spannbolzenaufnahme 130 im Spannzustand der Spannvorrichtung 100 dient ein Verriegelungssystem 132 der Spannvorrichtung 100, welches einen Kolben 134 und Verriegelungselemente 136 umfasst.

Der Kolben 134 umfasst einen im Wesentlichen hohlzylindrischen Basisteil 138, dessen Längsmittelachse mit einer Längsmittelachse 140 der Spannvorrichtung 100 übereinstimmt.

An seiner äußeren Umfangsfläche 142 ist der Basisteil 138 des Kolbens 134 an einer Umfangsfläche 144 der Spannvorrichtungsaufnahme 108 des Maschinentisches 110 längs der Längsmittelachse 140 verschiebbar geführt.

Dabei dichtet ein an dem Kolben 134 vorgesehener Dichtungsring 146 einen zwischen dem zweiten Gehäuseteil 116 und dem Kolben 134 ausgebildeten Fluidraum 148 gegenüber einem zwischen dem Kolben 134 und dem ersten Gehäuseteil 112 der Spannvorrichtung 100 ausgebildeten Federaufnahmeraum 150 ab.

Das als Bodenteil 114 ausgebildete zweite Gehäuseteil 116 umfasst eine beispielsweise scheibenförmige Bodenplatte 152 und eine sich von der Bodenplatte 152 zu den Verriegelungselementen 136 hin erstreckende, im Wesentlichen hohlzylindrische Verriegelungselementauflage 154.

Längs des Umfangs der Bodenplatte 152 sind an derselben mehrere, vorzugsweise längs des Umfangs äquidistant verteilte, Federaufnahmeausnehmungen 156 versehen, welche jeweils einen Federabstützsockel 158 aufnehmen.

Jeder Federabstützsockel 158 umfasst einen im Wesentlichen zylindrischen Grundkörper 160 und einen sich von dem Grundkörper 160 in radialer Richtung des Federabstützsockels 158 nach außen erstreckenden Ringbund 162, welcher an einem dem Kolben 134 abgewandten Ende des Federabstützsockels 158 angeordnet ist.

Der Durchmesser des Ringbundes 162 entspricht (bis auf ein geringfügiges Spiel) dem Innendurchmesser der jeweiligen Federaufnahmeausnehmung 156, in welchem der betreffende Federabstützsockel 158 aufgenommen ist.

Auf diese Weise entsteht zwischen einer inneren Umfangsfläche 164 der Federaufnahmeausnehmung 156 einerseits und der Umfangsfläche des Grundkörpers 160 des Federabstützsockels 158 andererseits ein Ringspalt 166, welcher ein dem Kolben 134 abgewandtes Ende jeweils eines Federpakets 168 aufnimmt.

In dem zeichnerisch dargestellten Ausführungsbeispiel umfasst jedes Federpaket 168 zwei Federelemente 170a und 170b.

Grundsätzlich kann aber auch vorgesehen sein, dass jedes Federpaket 168 nur ein Federelement 170a oder 170b umfasst.

Die Federelemente 170a und/oder 170b können beispielsweise als Druckfedern, insbesondere als Druck-Schraubenfedern, ausgebildet sein.

Dabei weist vorzugsweise das innere Federelement 170a einen geringeren Außendurchmesser auf als das äußere Federelement 170b.

Alternativ hierzu können die Federelemente 170a und/oder 170b auch als Tellerfedern ausgebildet sein.

Das der Federaufnahmeausnehmung 156 der Bodenplatte 152 abgewandte Ende jedes Federelements 170a, 170b ist an einer jeweils zugeordneten Federaufnahmeausnehmung 172 eines Zwischenkolbens 174 der Spannvorrichtung 100 aufgenommen.

Auf diese Weise stützt sich jedes Federelement 170a, 170b einerseits an der Bodenplatte 152 und andererseits an dem Zwischenkolben 174 ab.

Durch die elastische Rückstellkraft der Federelemente 170a, 170b wird der Zwischenkolben 174 in die in den Fig. 2 und 3 dargestellte Ruhestellung oder in die in Fig. 5 dargestellte Spannstellung der Spannvorrichtung 100 vorgespannt.

Der Zwischenkolben 174 greift in eine Zwischenkolbenaufnahme 176 an der der Bodenplatte 152 zugewandten Seite des Kolbens 134 ein.

Der Zwischenkolben 174 ist an seiner äußeren Umfangsfläche 178 längs der Längsmittelachse 140 der Spannvorrichtung 100 verschieblich an einer inneren Umfangsfläche 180 der Zwischenkolbenaufnahme 176 des Kolbens 134 geführt und vorzugsweise durch einen von der inneren Umfangsfläche 180 der Zwischenkolbenaufnahme 176 nach innen vorstehenden Sicherungsring 181 gegen ein Herausbewegen aus der Zwischenkolbenaufnahme 176 gesichert.

Mittels eines Dichtelements 182 ist der zwischen dem Zwischenkolben 174 und der Bodenplatte 152 ausgebildete Federaufnahmeraum 150 gegenüber einem zwischen einer der Bodenplatte 152 abgewandten Stirnseite 184 des Zwischenkolbens 174 und einer parallel zur Stirnseite 184 des Zwischenkolbens 174 verlaufenden Begrenzungswand 186 der Zwischenkolbenaufnahme 176 des Kolbens 134 ausgebildeten Zwischenkolben-Fluidraum 188 abgedichtet.

Die axiale Ausdehnung des Zwischenkolben-Fluidraums 188 längs der Längsmittelachse 140 der Spannvorrichtung 100 ist in dem in den Fig. 2 und 3 dargestellten Ruhezustand der Spannvorrichtung 100 und in dem in Fig. 5 dargestellten Spannzustand der Spannvorrichtung 100 kleiner als in dem in Fig. 4 dargestellten Freigabezustand der Spannvorrichtung 100, doch liegt die Stirnseite 184 des Zwischenkolbens 174 weder in dem Spannzustand oder dem Ruhezustand noch in dem Freigabezustand der Spannvorrichtung 100 an der Begrenzungswand 186 des Kolbens 132 an.

Vielmehr erfolgt die gesamte Kraftübertragung von dem Zwischenkolben 174 auf den Kolben 134 längs der Längsmittelachse 140 der Spannvorrichtung 100 über Verstärkungselemente 190, die in einem Verstärkungselementeraum 192 angeordnet sind, welcher von dem Basisteil 138 des Kolbens 134, von dem Zwischenkolben 174 und von dem ersten Gehäuseteil 112 der Spannvorrichtung 100 begrenzt wird.

In dem in den Fig. 1 bis 6 zeichnerisch dargestellten Ausführungsbeispiel einer Spannvorrichtung 100 sind die Verstärkungselemente 190 als Verstärkungskugeln 194 ausgebildet.

Wie am besten aus Fig. 6 zu ersehen ist, liegt jede der Verstärkungskugeln 194 über jeweils einen Punktkontakt an einer dem Zwischenkolben 174 zugewandten Stirnfläche 196 des Basisteils 138 des Kolbens 134, an einer dem Kolben 134 zugewandten konischen Abstützfläche 198 des Zwischenkolbens 174 und an einer Umfangsfläche 200 des ersten Gehäuseteils 112 an.

In dem Verstärkungselementeraum 192 ist eine Vielzahl von Verstärkungskugeln 194 angeordnet, welche längs der Umfangsrichtung des Verstärkungselementeraums 192 aufeinander folgen und längs der Umfangsrichtung des Verstärkungselementeraums 192 voneinander beabstandet sind.

Die Anzahl der Verstärkungselemente 190, beispielsweise der Verstärkungskugeln 194, in dem Verstärkungselementeraum 192 beträgt vorzugsweise mindestens 10, insbesondere mindestens 15, besonders bevorzugt mindestens 20, beispielsweise mindestens 26.

Ferner beträgt die Anzahl der Verstärkungselemente 190, beispielsweise der Verstärkungskugeln 194, in dem Verstärkungselementeraum 192 vorzugsweise höchstens 40, insbesondere höchstens 30, besonders bevorzugt höchstens 26.

Der Neigungswinkel der konischen Abstützfläche 198 des Zwischenkolbens 174, an welcher die Verstärkungselemente 190 anliegen, gegenüber der Längsmittelachse 140 der Spannvorrichtung 100 beträgt vorzugsweise mindestens 40° und/oder vorzugsweise höchstens 50°, beispielsweise ungefähr 45°.

Die Stirnfläche 196 des Kolbens 134, an welcher die Verstärkungselemente 190 anliegen, ist vorzugsweise senkrecht zu der Längsmittelachse 140 der Spannvorrichtung 100 ausgerichtet.

Der Winkel, unter welchem die Umfangsfläche 200 des ersten Gehäuseteils 112, an welcher die Verstärkungselemente 190 anliegen, gegenüber der Längsmittelachse 140 der Spannvorrichtung 100 geneigt ist, hängt davon ab, ob die Spannvorrichtung 100 sich in ihrem Spannzustand oder in ihrem Freigabezustand befindet.

In dem in den Fig. 5 und 6 dargestellten Spannzustand der Spannvorrichtung 100 greifen die Verstärkungselemente 190 in eine Ausnehmung 202 an der Umfangsfläche 200 des ersten Gehäuseteils 112 ein, wobei die Verstärkungselemente 190 jeweils in Punktkontakt mit einer geneigten Abstützfläche 204 des ersten Gehäuseteils 112 stehen, welche gegenüber der Längsmittelachse 140 der Spannvorrichtung 100 um einen Winkel α geneigt ist, wobei der Winkel α vorzugsweise größer als 15° und/oder vorzugsweise kleiner als 30° ist.

Die Verstärkungselemente 190 sind jedoch zusammen mit dem Kolben 134 und dem Zwischenkolben 174 der Spannvorrichtung 100 längs der Längsmittelachse 140 der Spannvorrichtung 100 beweglich, so dass die Verstärkungselemente 190 in dem in Fig. 4 dargestellten Freigabezustand der Spannvorrichtung 100 an einer zylindrischen Abstützfläche 206 des ersten Gehäuseteils 112 in Punktkontakt anliegen, wobei die zylindrische Abstützfläche 206 im Wesentlichen parallel zu der Längsmittelachse 140 der Spannvorrichtung 100 ausgerichtet ist.

Die Kräfte, welche von dem Zwischenkolben 174, dem ersten Gehäuseteil 112 und dem Kolben 134 jeweils auf ein Verstärkungselement 190 ausgeübt werden, sind parallel zu den lokalen Flächennormalen der konischen Abstützfläche 198 des Zwischenkolbens 174, parallel zu den lokalen Flächennormalen der geneigten Abstützfläche 204 beziehungsweise der zylindrischen Abstützfläche 206 des ersten Gehäuseteils 112 beziehungsweise parallel zur Flächennormalen der Stirnfläche 196 des Kolbens 134 ausgerichtet und somit parallel zu den Linien 208, 210 beziehungsweise 212 in Fig. 6 gerichtet.

Die Kraft F₁, die von dem Zwischenkolben 174 auf ein Verstärkungselement 190 ausgeübt wird, die Kraft F₂, die von dem ersten Gehäuseteil 112 auf ein Verstärkungselement 190 ausgeübt wird, und die Kraft F₃, die von dem Kolben 134 auf das Verstärkungselement 190 ausgeübt wird, addieren sich (vektoriell) zu Null.

Die Kraft F_{K}, welche von dem Verstärkungselement 190 auf den Kolben 134 ausgeübt wird, ist der Kraft F₃, welche der Kolben 134 auf das Verstärkungselement 190 ausübt, entgegengesetzt gleich groß.

Da der Winkel zwischen der geneigten Abstützfläche 204 des ersten Gehäuseteils 112 und der konischen Abstützfläche 198 des Zwischenkolbens 174 im Spannzustand der Spannvorrichtung 100 größer ist als der Winkel zwischen der zylindrischen Abstützfläche 206 des ersten Gehäuseteils 112 und der konischen Abstützfläche 198 im Freigabezustand der Spannvorrichtung 100, wirkt im Spannzustand der Spannvorrichtung 100 eine größere Kraft F_{K} auf den Kolben 134 als im Freigabezustand der Spannvorrichtung 100.

Ferner ist die von dem Zwischenkolben 174 über die Verstärkungselemente 190 indirekt auf den Kolben 134 übertragene Kraft F_{K} bei gleicher Federkraft und gleichem Federweg um einen Verstärkungsfaktor V größer als die von den Federelementen 170a, 170b auf den Zwischenkolben 174 ausgeübte Federkraft.

Die Verstärkungselemente 190 bilden somit zusammen mit der konischen Abstützfläche 198 des Zwischenkolbens 174, der Umfangsfläche 200 des ersten Gehäuseteils 112 und der Stirnfläche 196 des Kolbens 134 eine Kraftverstärkungseinrichtung 214 der Spannvorrichtung 100, welche die den Kolben 134 in dessen Spannstellung drückende Federkraft um den Verstärkungsfaktor V verstärkt.

Der Verstärkungsfaktor V beträgt vorzugsweise mindestens 2, besonders bevorzugt mindestens 2,5.

Wie am besten aus Fig. 6 zu ersehen ist, ist an dem Kolben 134 ein Dichtelement 216 vorgesehen, welches den Verstärkungselementeraum 192 gegenüber dem Zwischenkolben-Fluidraum 188 fluiddicht abdichtet.

Ferner ist an dem Zwischenkolben 174 ein Dichtelement 218 vorgesehen, welches den Verstärkungselementeraum 192 gegenüber dem Federaufnahmeraum 150 der Spannvorrichtung 100 fluiddicht abdichtet.

Außerdem ist an dem ersten Gehäuseteil 112 ein Dichtelement 220 vorgesehen, welches den Verstärkungselementeraum 192 gegenüber der Spannbolzenaufnahme 130 fluiddicht abdichtet.

In der Begrenzungswand 186 des Kolbens 134 sind eine oder mehrere (zeichnerisch nicht dargestellte) Durchtrittsöffnungen vorgesehen, durch welche der zwischen dem Kolben 134 und dem zweiten Gehäuseteil 116 ausgebildete Fluidraum 148 in Fluidverbindung mit dem Zwischenkolben-Fluidraum 188 steht.

Der Fluidraum 148 der Spannvorrichtung 100 steht über ein Fluidkanalsystem 222 im zweiten Gehäuseteil 116 der Spannvorrichtung 100 in Fluidverbindung mit einer Druckfluid-Zuleitung 224 des Maschinentisches 110.

Durch Zufuhr eines Betätigungsfluids in Form eines Druckfluids, beispielsweise eines Drucköls oder von Druckluft, zu dem Fluidraum 148 und von dort durch die Durchtrittsöffnungen in dem Kolben 134 zu dem Zwischenkolben-Fluidraum 188 sind der Zwischenkolben 174 und der Kolben 134 gegen die elastische Rückstellkraft der Federelemente 170a, 170b der Federpakete 168 längs der Längsmittelachse 140 der Spannvorrichtung 100 von der in den Fig. 5 und 6 dargestellten Spannstellung in die in Fig. 4 dargestellte Freigabestellung bewegbar.

Da sich das Druckfluid immer den Weg des geringsten Widerstands sucht, wird dabei zuerst der Zwischenkolben 174 in Richtung auf die Bodenplatte 152 zu verschoben, wodurch die Verstärkungselemente 190 aus der Ausnehmung 202 des ersten Gehäuseteils 112 herausgelangen und der axiale Abstand zwischen der Stirnseite 184 des Zwischenkolbens 174 und der Begrenzungswand 186 des Kolbens 134 vergrößert wird. Dann wird auch der Kolben 134 in Richtung auf die Bodenplatte 152 zu verschoben. Bei dieser Öffnungsbewegung laufen die Verstärkungselemente 190 an der zylindrischen Abstützfläche 206 des ersten Gehäuseteils 112 entlang.

Ein an dem Kolben 134 vorgesehenes Dichtelement 226 dichtet den Fluidraum 148 der Spannvorrichtung 100 gegenüber einem zwischen der Verriegelungselementaufnahme 154 und dem Kolben 134 einerseits und dem zweiten Gehäuseteil 116 andererseits ausgebildeten Verriegelungselementeaufnahmeraum 228 ab, in welchem die Verriegelungselemente 136 der Spannvorrichtung 100 angeordnet sind.

An einer äußeren Umfangsfläche 230 der Bodenplatte 152 ist ein Dichtelement 232 vorgesehen, welches den zwischen dem Kolben 134 und dem Zwischenkolben 174 einerseits und dem ersten Gehäuseteil 112 andererseits ausgebildeten Federaufnahmeraum 150 gegenüber einem zwischen dem ersten Gehäuseteil 112 einerseits und einer Bodenwand 234 der Spannvorrichtungsaufnahme 108 andererseits ausgebildeten Blasluftraum 236 abdichtet.

Dem Blasluftraum 236 ist über eine in dem Maschinentisch 110 vorgesehene Blasluftleitung 238 unter Druck stehende Blasluft zuführbar, welche durch eine mittige Durchtrittsöffnung 240 des ersten Gehäuseteils 112 in die Spannbolzenaufnahme 130 der Spannvorrichtung 100 eingeblasen werden kann, um in die Spannbolzenaufnahme 130 eingebrachte Verunreinigungen, beispielsweise Späne, aus der Spannbolzenaufnahme 130 zu entfernen, wenn sich kein Spannbolzen 128 in der Spannbolzenaufnahme 130 befindet, oder um einen in der Spannbolzenaufnahme 130 befindlichen Spannbolzen 128 abzublasen, so dass solche Verunreinigungen, beispielsweise Späne, von dem Spannbolzen 128 entfernt werden.

Der Kolben 134 der Spannvorrichtung 100 umfasst einen im Wesentlichen hohlzylindrischen Verdrängungsteil 242, welcher sich von dem Basisteil 138 des Kolbens 134 aus längs der Richtung der Längsmittelachse 140 der Spannvorrichtung 100 von dem Zwischenkolben 174 weg erstreckt und verschieblich an einem im Wesentlichen hohlzylindrischen Kolbenführungsteil 244 des zweiten Gehäuseteils 116 geführt ist.

An einer äußeren Umfangsfläche 246 des Kolbenführungsteils 244 des zweiten Gehäuseteils 116 ist ein Dichtelement 248 vorgesehen, welches den zwischen dem Kolben 134 und dem zweiten Gehäuseteil 116 ausgebildeten Fluidraum 148 gegenüber einem dem zweiten Gehäuseteil 116 benachbarten Teilbereich der Spannvorrichtungsaufnahme 108 im Maschinentisch 110 abdichtet.

Der Verdrängungsteil 242 des Kolbens 134 steht in Kontakt mit den Verriegelungselementen 136 des Verriegelungssystems 132 und bewegt dieselben in der Radialrichtung der Längsmittelachse 140 der Spannvorrichtung 100 nach innen, wenn der Kolben 134 von der in Fig. 4 dargestellten Freigabestellung in die in Fig. 5 dargestellte Spannstellung bewegt wird.

Im Freigabezustand der Spannvorrichtung 100, welcher in Fig. 4 dargestellt ist, liegt jedes der Verriegelungselemente 136 an einer Verdrängungsschräge 250 des Kolbens 134 an, welche gegenüber der Richtung der Längsmittelachse 140 der Spannvorrichtung 100 um einen spitzen Winkel geneigt ist.

Die mehreren, beispielsweise acht, Verriegelungselemente 136 bilden einen Verriegelungselementering 252, in welchem die Verriegelungselemente 136 längs einer Umfangsrichtung des Verriegelungselementerings 252 aufeinander folgen.

Dabei sind die in der Umfangsrichtung aufeinander folgenden Verriegelungselemente 136 längs der Umfangsrichtung um einen Abstand voneinander beabstandet, welcher in dem in Fig. 4 dargestellten Freigabezustand des Verriegelungselementerings 252 größer ist als in dem in Fig. 9 dargestellten Spannzustand des Verriegelungselementerings 252.

Bei der in den Fig. 1 bis 6 dargestellten ersten Ausführungsform einer Spannvorrichtung 100 sind die Verriegelungselemente 136 als jeweils eine Verriegelungskugel 254 ausgebildet.

Wie am besten aus Fig. 6 zu ersehen ist, liegt in dem Spannzustand der Spannvorrichtung 100, in welchem der Spannbolzen 128 in der Spannbolzenaufnahme 130 der Spannvorrichtung 100 verriegelt ist, jedes der Verriegelungselemente 136 lastübertragend an dem Kolben 134 an einer Kolben-Kontaktstelle 256 an, an dem zweiten Gehäuseteil 116 an jeweils einer Gehäuseteil-Kontaktstelle 258 an und an dem Spannbolzen 128 an jeweils einer Spannbolzen-Kontaktstelle 260 an.

Da die Verriegelungselemente 136 bei der in den Fig. 1 bis 6 zeichnerisch dargestellten ersten Ausführungsform einer Spannvorrichtung 100 als Verriegelungskugeln 254 ausgebildet sind, sind dabei die jeweilige Kolben-Kontaktstelle 256, die jeweilige Gehäuseteil-Kontaktstelle 258 und die jeweilige Spannbolzen-Kontaktstelle 260 jeweils punktförmig ausgebildet.

Mit der Kolben-Kontaktstelle 256 liegt jedes Verriegelungselement 136 im Spannzustand der Spannvorrichtung 100 an einer Verriegelungselement-Kontaktfläche 262 des Kolbens 134 an, welche gegenüber der Längsmittelachse 140 der Spannvorrichtung 100 um einen kleinen spitzen Winkel β geneigt ist.

Dabei beträgt der Winkel β vorzugsweise weniger als 8°, insbesondere weniger als 6°, beispielsweise ungefähr 5°.

Ferner beträgt der Winkel β vorzugsweise mehr als 2°, insbesondere mehr als 4°, beispielsweise ungefähr 5°.

Der Spannbolzen 128, welcher an einem Werkstückträger 126 oder unmittelbar an einem (nicht dargestellten) Werkstück festgelegt ist, umfasst bei dem zeichnerisch dargestellten Ausführungsbeispiel eine Spannbolzenhülse 264 und eine Fangschraube 266 (siehe die Fig. 4 und 5).

Die Spannbolzenhülse 264 ist im Wesentlichen rotationssymmetrisch zu ihrer Längsmittelachse 268 ausgebildet, welche im Spannzustand der Spannvorrichtung 100 im Wesentlichen mit der Längsmittelachse 140 der Spannvorrichtung 100 zusammenfällt.

Die Spannbolzenhülse 264 umfasst einen Sockelabschnitt 270, einen sich an den Sockelabschnitt 270 anschließenden Zentrierabschnitt 272, einen sich an den Zentrierabschnitt 272 anschließenden ersten konischen Abschnitt 274, einen sich an den ersten konischen Abschnitt 274 anschließenden zylindrischen Abschnitt 276, einen sich an den zylindrischen Abschnitt 276 anschließenden zweiten konischen Abschnitt 278 und einen sich an den zweiten konischen Abschnitt 278 anschließenden Endabschnitt 280.

Der Sockelabschnitt 270 der Spannbolzenhülse 264 greift in eine Spannbolzenaufnahme 282 des Werkstückträgers 126 ein, wenn der Spannbolzen 128 an dem Werkstückträger 126 montiert ist.

Der Zentrierabschnitt 272 der Spannbolzenhülse 264 liegt im Spannzustand der Spannvorrichtung 100 mit seiner zylindrischen Umfangsfläche an der zylindrischen Begrenzungsfläche der mittigen Ausnehmung 124 in dem zweiten Gehäuseteil 116 an, um so den Spannbolzen 128 in der Spannbolzenaufnahme 130 der Spannvorrichtung 100 zu zentrieren.

Der erste konische Abschnitt 274 und der zylindrische Abschnitt 276 der Spannbolzenhülse 264 begrenzen eine Ausnehmung an dem Umfang des Spannbolzens 128, in welche die Verriegelungselemente 136 im Spannzustand der Spannvorrichtung 100 eingreifen können, ohne in diesem Bereich den Spannbolzen zu berühren.

Der zweite konische Abschnitt 278 der Spannbolzenhülse 264 weist eine konische Verriegelungselement-Kontaktfläche 284 auf, an welcher im Spannzustand der Spannvorrichtung 100 die Spannbolzen-Kontaktstellen 260 der Verriegelungselemente 136 lastübertragend anliegen.

Die Verriegelungselement-Kontaktfläche 284 des Spannbolzens 128 ist gegenüber der Längsmittelachse 268 des Spannbolzens 128 und damit auch gegenüber der Längsmittelachse 140 der Spannvorrichtung 100 um einen Winkel γ geneigt.

Der Winkel γ beträgt vorzugsweise weniger als 45°, insbesondere weniger als 40°, beispielsweise ungefähr 35°.

Ferner beträgt der Winkel γ vorzugsweise mehr als 25°, insbesondere mehr als 30°, beispielsweise ungefähr 35°.

An dem Endabschnitt 280 der Spannbolzenhülse 264 ist stirnseitig eine im Wesentlichen kegelstumpfförmige Schraubenkopfaufnahme vorgesehen, welche einen hierzu komplementär ausgebildeten Teil eines Schraubenkopfs 286 der Fangschraube 266 des Spannbolzens 128 aufnimmt.

Der Schraubenkopf 286 der Fangschraube 266 ist mit einer Ausnehmung 288 versehen, in welche ein Werkzeug, beispielsweise ein Schraubendreher, eingreifen kann, um die Fangschraube 266 um ihre Längsmittelachse zu drehen.

Die Ausnehmung 288 kann beispielsweise einen polygonalen Querschnitt, insbesondere einen sechseckigen Querschnitt, aufweisen.

Ein Schaft 290 der Fangschraube 266 erstreckt sich von dem Schraubenkopf 286 aus durch eine mittige Bohrung der Spannbolzenhülse 264 hindurch in eine Gewindebohrung 292 des Werkstückträgers 126 hinein, wo ein Außengewinde der Fangschraube 266 in Eingriff mit einem Innengewinde der Gewindebohrung 292 steht, um die Fangschraube 266 und die mittels der Fangschraube 266 formschlüssig an dem Werkstückträger 126 gehaltene Spannbolzenhülse 264 an dem Werkstückträger 126 zu sichern.

Um den Werkstückträger 126 präzise und positionsgenau an der Spannvorrichtung 100 einspannen zu können, wird die Spannvorrichtung 100 zunächst von dem in Fig. 3 dargestellten Ruhezustand in den in Fig. 4 dargestellten Freigabezustand überführt, in welchem die Verriegelungselemente 136 gegenüber dem in Fig. 3 dargestellten Ruhezustand (und auch gegenüber dem in Fig. 5 dargestellten Spannzustand) in einer Radialrichtung der Längsmittelachse 140 der Spannvorrichtung 100 nach außen verschoben sind.

Dieser Freigabezustand der Spannvorrichtung 100 wird erreicht, indem ein unter Druck stehendes Fluid oder fluides Medium (gasförmig oder flüssig, beispielsweise ein Hydrauliköl) in den Fluidraum 148 zwischen dem zweiten Gehäuseteil 116 und dem Kolben 134 eingebracht wird. Dieses unter Druck stehende Fluid oder fluides Medium gelangt durch die Durchtrittsöffnungen in der Begrenzungswand 186 des Kolbens 134 auch in den Zwischenkolben-Fluidraum 188, welcher zwischen der Begrenzungswand 186 des Kolbens 134 und der Stirnseite 184 des Zwischenkolbens 174 ausgebildet ist.

Das unter Druck stehende Fluid oder fluide Medium drückt den Zwischenkolben 174 gegen die elastische Rückstellkraft der Federpakete 168 längs der Längsmittelachse 140 der Spannvorrichtung 100 gegen den Sicherungsring 181 an der inneren Umfangsfläche 180 der Zwischenkolbenaufnahme 176, welcher als ein Anschlag für die Bewegung des Zwischenkolbens 174 dient.

Der Kolben 134 folgt der Bewegung des Zwischenkolbens 174 und wird von dem unter Druck stehenden Fluid oder fluiden Medium gegen die Bodenplatte 152 des ersten Gehäuseteils 112 gedrückt.

Die Verstärkungselemente 190 der Kraftverstärkungseinrichtung 214 liegen im Freigabezustand der Spannvorrichtung 100 an der parallel zur Längsmittelachse 140 der Spannvorrichtung 100 ausgerichteten zylindrischen Abstützfläche 206 des ersten Gehäuseteils 112 der Spannvorrichtung 100 an.

In diesem in Fig. 4 dargestellten Freigabezustand der Spannvorrichtung 100 wird der Werkstückträger 126 so an die Spannvorrichtung 100 herangeführt, dass der an dem Werkstückträger 126 montierte Spannbolzen 128 durch die mittige Ausnehmung 124 des als Gehäusedeckel 118 dienenden zweiten Gehäuseteils 116 der Spannvorrichtung 100 hindurch in die Spannbolzenaufnahme 130 der Spannvorrichtung 100 gelangt.

Wenn sich der Spannbolzen 128 vollständig in der Spannbolzenaufnahme 130 befindet (und vorzugsweise eine der Spannvorrichtung 100 zugewandte Abstützfläche 294 des Werkstückträgers 126 - vorzugsweise flächig - an dem zweiten Gehäuseteil 116 der Spannvorrichtung 100 anliegt), wird die Beaufschlagung des Fluidraums 148 und damit auch des Zwischenkolben-Fluidraums 188 mit dem unter Druck stehenden Fluid oder fluiden Medium unterbrochen, worauf der Zwischenkolben 174 durch die elastische Rückstellkraft der Federpakete 168 längs der Längsmittelachse 140 der Spannvorrichtung 100 in Richtung auf das zweite Gehäuseteil 116 zu bewegt wird.

Die von den Federelementen 170a, 170b auf den Zwischenkolben 174 ausgeübte Federkraft wird dabei, wie vorstehend beschrieben, mittels der Verstärkungselemente 190 auf den Kolben 134 übertragen, so dass auch der Kolben 134 längs der Längsmittelachse 140 der Spannvorrichtung 100 in Richtung auf das zweite Gehäuseteil 116 zu bewegt wird.

Dabei werden die Verriegelungselemente 136 des Verriegelungselementerings 252 von dem Verdrängungsteil 242 des Kolbens 134 radial nach innen, zu der Längsmittelachse 140 und zu dem Spannbolzen 128 hin, verdrängt, bis der in den Fig. 5 und 6 dargestellte Spannzustand der Spannvorrichtung 100 erreicht ist, in welchem der Spannbolzen 128 durch die Verriegelungselemente 136 in der Spannvorrichtung 100 verriegelt ist.

Dabei bildet die Verriegelungselement-Kontaktfläche 284 des Spannbolzens 128 eine Hinterschneidung, welche die Verriegelungselemente 136 in der Spannstellung der Spannvorrichtung 100 hintergreift.

Während der Bewegung des Zwischenkolbens 174 und des Kolbens 134 von der Freigabestellung in die Spannstellung ist die Stirnseite 184 des Zwischenkolbens 174 stets von der Begrenzungswand 186 des Kolbens 134 beabstandet, weil die Verstärkungselemente 190, die im Verstärkungselementeraum 192 zwischen dem Zwischenkolben 174, dem Kolben 134 und dem ersten Gehäuseteil 112 der Spannvorrichtung 100 angeordnet sind, den Kolben 134 auf Abstand von dem Zwischenkolben 174 halten.

Die von den Federelementen 170a, 170b über den Zwischenkolben 174 und die Verstärkungselemente 190 auf den Kolben 134 ausgeübte Kraft nimmt mit wachsender Länge der Federelemente 170a, 170b zunächst leicht ab, bis die Verstärkungselemente 190 am Rand der Ausnehmung 202 in der Umfangsfläche 200 des ersten Gehäuseteils 112 angelangt sind.

Werden nun der Zwischenkolben 174 und damit auch der Kolben 134 weiter längs der Längsmittelachse 140 der Spannvorrichtung 100 zu dem zweiten Gehäuseteil 116 der Spannvorrichtung 100 hin verschoben, bis der in den Fig. 5 und 6 dargestellte Spannzustand der Spannvorrichtung 100 erreicht ist, so bewegen sich die Verstärkungselemente 190 in die Ausnehmung 202 an der Umfangsfläche 200 des ersten Gehäuseteils 112 hinein, wodurch die über die Verstärkungselemente 190 auf den Kolben 134 ausgeübte Kraft sehr steil ansteigt.

Die Verstärkungselemente 190 wirken somit als ein Kraftverstärker, welcher die auf den Kolben 134 mittels der Federelemente 170a, 170b ausgeübte Rückstellkraft mit wachsender Länge der Federelemente 170a, 170b immer mehr verstärkt, bis ein Verstärkungsfaktor V in der Größenordnung von 2 bis 3 erreicht ist.

Zugleich mit der Bewegung der Verstärkungselemente 190 in der Radialrichtung der Längsmittelachse 140 der Spannvorrichtung 100 nach innen werden auch die Verriegelungselemente 136 von dem Kolben 134 in einer Radialrichtung der Längsmittelachse 140 der Spannvorrichtung 100 nach innen verschoben, so dass sie in Eingriff mit der Ausnehmung am Umfang des zu spannenden Spannbolzens 128 gelangen.

Durch die Kraftverstärkung mittels der durch die Verstärkungselemente 190 gebildeten Kraftverstärkungseinrichtung 214 wird der Spannbolzen 128 mit einer besonders hohen Rückhaltekraft in der mittigen Ausnehmung 124 der Spannvorrichtung 100 festgehalten, ohne dass hierfür besonders starke Federelemente 170a, 170b verwendet werden müssen.

Ein Verkanten der Federelemente 170a, 170b relativ zu deren jeweiliger Längsachse wird dadurch vermieden, dass in jeder Federaufnahmeausnehmung 156 der Bodenplatte 152 jeweils ein Federabstützsockel 158 angeordnet ist, dessen Grundkörper 160 im Wesentlichen zylindrisch ausgebildet und parallel zu der Längsmittelachse 140 der Spannvorrichtung 100 ausgerichtet ist.

Gegen eine Verdrehung relativ zu dem ersten Gehäuseteil 112 (um die Längsmittelachse 140 der Spannvorrichtung 100) ist der Zwischenkolben 174 mittels einer (nicht dargestellten) Verdrehungssicherungseinrichtung gesichert.

Die Verdrehungssicherungseinrichtung umfasst beispielsweise einen Verdrehungssicherungsstift, welcher einerseits in eine an der Bodenplatte 152 ausgebildete bodenplattenseitige Verdrehungssicherungsstiftaufnahme und andererseits in eine an dem Zwischenkolben 174 ausgebildete zwischenkolbenseitige Verdrehungssicherungsstiftaufnahme eingreift.

Dabei kann der Verdrehungssicherungsstift beispielsweise als ein Zylinderstift ausgebildet sein.

Bei einer (zeichnerisch nicht dargestellten) Variante der in den Fig. 1 bis 6 dargestellten ersten Ausführungsform einer Spannvorrichtung 100 kann vorgesehen sein, dass dem Federaufnahmeraum 150 über eine Druckfluidleitung ein unter Druck stehendes Fluid oder fluides Medium zuführbar ist, wenn die Spannvorrichtung 100 sich in dem in den Fig. 5 und 6 dargestellten Spannzustand befindet. Hierdurch kann die Einspannkraft, mit welcher der Spannbolzen 128 in der Spannbolzenaufnahme 130 der Spannvorrichtung 100 verriegelt wird, über die mittels der Kraftverstärkungseinrichtung 214 verstärkte elastische Rückstellkraft der Federelemente 170a, 170b hinaus noch weiter erhöht werden, indem mittels des unter Druck stehenden Fluids oder fluiden Mediums eine zusätzliche Druckkraft auf den Zwischenkolben 174 ausgeübt wird, welche zu dem zweiten Gehäuseteil 116 hin gerichtet ist und über die Verstärkungselemente 190 um den Verstärkungsfaktor V verstärkt auf den Kolben 134 und damit auf die Verriegelungselemente 136 übertragen wird.

Um - beispielsweise nach einer erfolgten Bearbeitung eines Werkstücks - den Werkstückträger 126 wieder von der Spannvorrichtung 100 lösen zu können, wird dem Fluidraum 148 und damit auch dem Zwischenkolben-Fluidraum 188 der Spannvorrichtung 100 wieder ein Fluid oder ein fluides Medium unter erhöhtem Druck zugeführt, wodurch zunächst der Zwischenkolben 174 und dann auch der Kolben 134 wieder aus der in den Fig. 5 und 6 dargestellten Spannstellung in die in Fig. 4 dargestellte Freigabestellung bewegt wird.

Dadurch können die Verriegelungselemente 136 wieder radial nach außen in ihre Freigabestellung bewegt werden, in welcher sie ein Herausbewegen des Spannbolzens 128 aus der Spannbolzenaufnahme 130 nicht behindern.

Nun kann der Werkstückträger 126 von der Spannvorrichtung 100 entfernt werden, wobei der Spannbolzen 128 aus der Spannbolzenaufnahme 130 der Spannvorrichtung 100 herausgelangt.

Anschließend kann ein neuer Spannvorgang durchgeführt werden, mittels welchem derselbe Werkstückträger 126 nochmals oder ein anderer Werkstückträger 126 an der Spannvorrichtung 100 eingespannt wird.

Eine in den Fig. 7 bis 14 dargestellte zweite Ausführungsform einer Spannvorrichtung 100 unterscheidet sich von der in den Fig. 1 bis 6 dargestellten ersten Ausführungsform durch die Gestaltung der Verriegelungselemente 136 des Verriegelungselementerings 252 der Spannvorrichtung 100.

Wie am besten aus Fig. 12 zu ersehen ist, ist bei dieser Ausführungsform jedes Verriegelungselement 136 als ein Torus-Segment ausgebildet.

Jedes der Verriegelungselemente 136 weist eine erste ebene Begrenzungsfläche 296 auf, welche senkrecht zu der Längsmittelachse 140 der Spannvorrichtung 100 ausgerichtet ist.

Ferner weist jedes der Verriegelungselemente 136 eine der Längsmittelachse 140 der Spannvorrichtung 100 zugewandte innere Umfangsfläche 298 und eine der Längsmittelachse 140 abgewandte äußere Umfangsfläche 300 auf.

Die innere Umfangsfläche 298 umfasst einen der ersten ebenen Begrenzungsfläche 296 benachbarten konischen Abschnitt 302.

Der konische Abschnitt 302 geht in einen im Wesentlichen zylindrischen Abschnitt 304 über.

Der zylindrische Abschnitt 304 ist vorzugsweise im Wesentlichen parallel zu der Längsmittelachse 140 der Spannvorrichtung 100 ausgerichtet.

Der zylindrische Abschnitt 304 geht an seinem dem konischen Abschnitt 302 abgewandten Rand in einen konvex gekrümmten Abschnitt 306 über.

Die äußere Umfangsfläche 300 des Verriegelungselement 136 umfasst einen ersten konvex gekrümmten Abschnitt 308, welcher der ersten ebenen Begrenzungsfläche 296 des Verriegelungselements 136 benachbart ist.

Der erste konvex gekrümmte Abschnitt 308 der äußeren Umfangsfläche 300 geht an seinem der ersten ebenen Begrenzungsfläche 296 abgewandten Rand in einen zylindrischen Abschnitt 310 über.

Der zylindrische Abschnitt 310 der äußeren Umfangsfläche 300 ist vorzugsweise im Wesentlichen parallel zu der Längsmittelachse 140 der Spannvorrichtung 100 ausgerichtet.

Der zylindrische Abschnitt 310 der äußeren Umfangsfläche 300 geht an seinem dem ersten konvex gekrümmten Abschnitt 308 abgewandten Rand in einen zweiten konvex gekrümmten Abschnitt 312 der äußeren Umfangsfläche 300 über.

Der zweite konvex gekrümmte Abschnitt 312 der äußeren Umfangsfläche 300 grenzt an den konvex gekrümmten Abschnitt 306 der inneren Umfangsfläche 298 des Verriegelungselements 136 an.

Wie aus Fig. 12 zu ersehen ist, liegt in dem Spannzustand der Spannvorrichtung 100, in welchem der Spannbolzen 128 in der Spannbolzenaufnahme 130 der Spannvorrichtung 100 verriegelt ist, jedes der Verriegelungselemente 136 der zweiten Ausführungsform einer Spannvorrichtung 100 lastübertragend an dem Kolben 134, an dem zweiten Gehäuseteil 116 und an dem Spannbolzen 128 an jeweils einer Kontaktstelle an.

Dabei ist die jeweilige Spannbolzen-Kontaktstelle 260, mit welcher das jeweilige Verriegelungselement 136 in dem Spannzustand an dem Spannbolzen 128 anliegt, linienförmig ausgebildet.

Dies bedeutet, dass die Spannbolzen-Kontaktstelle 260 sich in einer Längsrichtung, welche der Umfangsrichtung des Verriegelungselements 136 beziehungsweise des Verriegelungselementerings 252 entspricht, über eine große Strecke s erstreckt, welche in der Größenordnung der Erstreckung des jeweiligen Verriegelungselements 136 längs der Umfangsrichtung liegt, während die Ausdehnung der Spannbolzen-Kontaktstelle 260 in einer zu der Längsrichtung senkrecht ausgerichteten Querrichtung im Verhältnis zu der Längserstreckung s der Spannbolzen-Kontaktstelle 260 sehr klein ist.

Vorzugsweise ist der Krümmungsradius der Oberfläche des Verriegelungselements 136 im Bereich der Spannbolzen-Kontaktstelle 260, in einer senkrecht auf der Umfangsrichtung des Verriegelungselements 136 beziehungsweise des Verriegelungselementerings 252 stehenden Ebene, maximal 10 mm, besonders bevorzugt maximal 5 mm.

Dies führt zu einer ringförmigen Linienbelastung der Verriegelungselemente 136 des Verriegelungselementerings 252 durch den Spannbolzen 128 beziehungsweise zu einer ringförmigen Linienbelastung des Spannbolzens 128 durch die Verriegelungselemente 136 des Verriegelungselementerings 252.

Diese Linienbelastung, die über die linienförmige Spannbolzen-Kontaktstelle 260 übertragen wird, ist aufgrund der linearen Ausdehnung der Spannbolzen-Kontaktstelle 260 geringer als bei einer Punktbelastung an einer punktförmigen Spannbolzen-Kontaktstelle 260, wie sie auftritt, wenn die Verriegelungselemente 136 der Spannvorrichtung 100 als Verriegelungskugeln 254 ausgebildet sind, wie bei der in den Fig. 1 bis 6 dargestellten ersten Ausführungsform der Spannvorrichtung 100.

Die Spannbolzen-Kontaktstelle 260 jedes Verriegelungselements 136 liegt bei der zweiten Ausführungsform der Spannvorrichtung 100 im Bereich des konvex gekrümmten Abschnitts 306 der inneren Umfangsfläche 298 des Verriegelungselements 136.

Wie aus Fig. 12 ferner zu ersehen ist, liegt jedes der Verriegelungselemente 136 des Verriegelungselementerings 252 im Spannzustand der Spannvorrichtung 100, in welchem der Spannbolzen 128 in der Spannbolzenaufnahme 130 der Spannvorrichtung 100 verriegelt ist, an dem Kolben 134, vorzugsweise an dem Verdrängungsteil 242 des Kolbens 134, lastübertragend an einer Kolben-Kontaktstelle 256 an, wobei die Kolben-Kontaktstelle 256, mit welcher das jeweilige Verriegelungselement 136 in dem Spannzustand der Spannvorrichtung 100 an dem Kolben 134 anliegt, bei dieser zweiten Ausführungsform ebenso wie die Spannbolzen-Kontaktstelle 260 linienförmig ausgebildet ist.

Die Kolben-Kontaktstelle 256 liegt bei dieser Ausführungsform im Bereich des zweiten konvex gekrümmten Abschnitts 312 der äußeren Umfangsfläche 300 des jeweiligen Verriegelungselements 136.

Durch die Linienförmigkeit der Kolben-Kontaktstellen 256 der Verriegelungselemente 136 wird die jeweilige lokale Belastung des Kolbens 134 durch die Verriegelungselemente 136 beziehungsweise die jeweilige lokale Belastung der Verriegelungselemente 136 durch den Kolben 134 im Vergleich zu der Punktbelastung reduziert, welcher der Kolben 134 beziehungsweise die Verriegelungselemente 136 unterliegen, wenn die Verriegelungselemente 136 als Verriegelungskugeln 254 ausgebildet sind, wie bei der in den Fig. 1 bis 6 dargestellten ersten Ausführungsform der Spannvorrichtung 100.

Wie aus Fig. 12 ferner zu ersehen ist, liegt jedes der Verriegelungselemente 136 des Verriegelungselementerings 252 im Spannzustand der Spannvorrichtung 100, in welchem der Spannbolzen 128 in der Spannbolzenaufnahme 130 der Spannvorrichtung 100 verriegelt ist, an dem zweiten Gehäuseteil 116 lastübertragend an einer Gehäuseteil-Kontaktstelle 258 an, wobei die Gehäuseteil-Kontaktstelle 258, mit welcher das jeweilige Verriegelungselement 136 in dem Spannzustand der Spannvorrichtung 100 an dem zweiten Gehäuseteil 116 anliegt, bei dieser zweiten Ausführungsform der Spannvorrichtung 100 flächenförmig ausgebildet ist.

Die Gehäuseteil-Kontaktstelle 258 bildet nämlich einen Bestandteil der ersten ebenen Begrenzungsfläche 296 des jeweiligen Verriegelungselements 136 und ist daher im Wesentlichen eben ausgebildet.

Die Gehäuseteil-Kontaktstelle 258 ist bei dieser Ausführungsform vorzugsweise senkrecht zu der Längsmittelachse 140 der Spannvorrichtung 100 ausgerichtet.

Die Gehäuseteil-Kontaktstelle 258 liegt im Spannzustand der Spannvorrichtung 100 flächig an einer Verriegelungselement-Kontaktfläche 314 an der den Verriegelungselementen 136 zugewandten Seite des zweiten Gehäuseteils 116 an.

Das flächige Anliegen der Gehäuseteil-Kontaktstelle 258 des Verriegelungselements 136 an der Verriegelungselement-Kontaktfläche 314 des zweiten Gehäuseteils 116 im Spannzustand der Spannvorrichtung 100 führt dazu, dass die Verriegelungselemente 136 des Verriegelungselementerings 252 im Spannzustand der Spannvorrichtung 100 bei dieser zweiten Ausführungsform einer ringförmigen Flächenbelastung durch das zweite Gehäuseteil 116 unterliegen und dass das zweite Gehäuseteil 116 im Spannzustand der Spannvorrichtung 100 bei dieser zweiten Ausführungsform einer ringförmigen Flächenbelastung durch die Verriegelungselemente 136 des Verriegelungselementerings 252 unterliegt.

Durch die Flächenförmigkeit der Gehäuseteil-Kontaktstellen 258 der Verriegelungselemente 136 wird die jeweilige lokale Belastung des zweiten Gehäuseteils 116 durch die Verriegelungselemente 136 beziehungsweise die jeweilige lokale Belastung der Verriegelungselemente 136 durch das zweite Gehäuseteil 116 im Vergleich zu der Punktbelastung reduziert, welcher das zweite Gehäuseteil 116 unterliegt, wenn die Verriegelungselemente 136 als Verriegelungskugeln 254 ausgebildet sind, wie bei der in den Fig. 1 bis 6 dargestellten ersten Ausführungsform der Spannvorrichtung 100.

Die Verriegelungselemente 136 des Verriegelungselementerings 252 der in den Fig. 7 bis 14 dargestellten zweiten Ausführungsform der Spannvorrichtung 100, welche als Torus-Segmente ausgebildet sind, liegen im Spannzustand der Spannvorrichtung 100 also mit einer linienförmigen Spannbolzen-Kontaktstelle 260 an dem Spannbolzen 128 an, mit einer linienförmigen Kolben-Kontaktstelle 256 an dem Kolben 134 an und mit einer flächenförmigen Gehäuseteil-Kontaktstelle 258 an dem zweiten Gehäuseteil 116 der Spannvorrichtung 100 an.

In den Fig. 13 und 14 ist insbesondere eine Verdrehungssicherungseinrichtung 322 dargestellt, welche eine Verdrehung des Zwischenkolbens 174 relativ zu dem ersten Gehäuseteil 112 (um die Längsmittelachse 140 der Spannvorrichtung 100) verhindert.

Die Verdrehungssicherungseinrichtung 322 umfasst vorzugsweise einen Verdrehungssicherungsstift 316, welcher im Wesentlichen parallel zu der Längsmittelachse 140 der Spannvorrichtung 100 ausgerichtet ist.

Der Verdrehungssicherungsstift 316 greift einerseits in eine an der Bodenplatte 152 ausgebildete bodenplattenseitige Verdrehungssicherungsstiftaufnahme 318 und andererseits in eine an dem Zwischenkolben 174 ausgebildete zwischenkolbenseitige Verdrehungssicherungsstiftaufnahme 320 ein.

Der Verdrehungssicherungsstift 316 ist vorzugsweise als ein Zylinderstift ausgebildet.

Die Verdrehungssicherungseinrichtung 322 der in den Fig. 1 bis 6 dargestellten ersten Ausführungsform einer Spannvorrichtung 100 kann ebenso ausgebildet sein wie dies in den Fig. 13 und 14 für die zweite Ausführungsform dargestellt und vorstehend beschrieben ist.

Im Übrigen stimmt die in den Fig. 7 bis 14 dargestellte zweite Ausführungsform einer Spannvorrichtung 100 hinsichtlich Aufbau, Funktion und Herstellungsweise mit der in den Fig. 1 bis 6 dargestellten ersten Ausführungsform überein, auf deren vorstehende Beschreibung insoweit Bezug genommen wird.

## Patentansprüche

1. Spannvorrichtung zum Einspannen eines an einem Werkstück oder an einem Werkstückträger (126) angeordneten Spannbolzens (128), wobei die Spannvorrichtung (100) Verriegelungselemente (136), einen Kolben (134) zum Bewegen der Verriegelungselemente (136) zu einer Längsmittelachse (140) der Spannvorrichtung (100) hin, ein erstes Gehäuseteil (112) und ein zweites Gehäuseteil (116) und eine Vorspannvorrichtung zum Spannen des Kolbens (134) in eine Spannstellung des Kolbens (134) umfasst,
wobei die Vorspannvorrichtung einen Zwischenkolben (174) umfasst, welcher sich bei einer Bewegung des Kolbens (134) von einer Freigabestellung in die Spannstellung zumindest abschnittsweise in der gleichen Richtung wie der Kolben (134) bewegt,
und wobei die Spannvorrichtung (100) Verstärkungselemente (190) umfasst, welche zumindest einen Teil der Vorspannkraft von dem Zwischenkolben (174) auf den Kolben (134) übertragen,
**dadurch gekennzeichnet,**
**dass** die Verstärkungselemente (190) zumindest zeitweise gleichzeitig an dem Zwischenkolben (174), an dem Kolben (134) und an dem ersten Gehäuseteil (112) anliegen.

2. Spannvorrichtung nach Anspruch 1, **dadurch gekennzeichnet, dass** die Verstärkungselemente (190) sich bei der Bewegung des Kolbens (134) von der Freigabestellung in die Spannstellung zumindest abschnittsweise parallel zur Bewegung des Kolbens (134) bewegen.

3. Spannvorrichtung nach einem der Ansprüche 1 oder 2, **dadurch gekennzeichnet, dass** die Verstärkungselemente (190) sich bei der Bewegung des Kolbens (134) von der Freigabestellung in die Spannstellung zumindest abschnittsweise parallel zu der Längsmittelachse (140) der Spannvorrichtung (100) bewegen.

4. Spannvorrichtung nach einem der Ansprüche 1 bis 3, **dadurch gekennzeichnet, dass** die Verstärkungselemente (190) sich bei der Bewegung des Kolbens (134) von der Freigabestellung in die Spannstellung zumindest abschnittsweise in einer Radialrichtung der Längsmittelachse (140) der Spannvorrichtung (100) bewegen.

5. Spannvorrichtung nach einem der Ansprüche 1 bis 4, **dadurch gekennzeichnet, dass** die Verstärkungselemente (190) in der Spannstellung des Kolbens (134) zumindest teilweise in einer Ausnehmung (202) an einer Umfangsfläche (200) des ersten Gehäuseteils (112) der Spannvorrichtung (100) aufgenommen sind.

6. Spannvorrichtung nach einem der Ansprüche 1 bis 5, **dadurch gekennzeichnet, dass** der Zwischenkolben (174) verschiebbar an dem Kolben (134) geführt ist.

7. Spannvorrichtung nach einem der Ansprüche 1 bis 6, **dadurch gekennzeichnet, dass** der Zwischenkolben (174) zumindest zeitweise in der Axialrichtung der Spannvorrichtung (100) von dem Koben (134) beabstandet ist.

8. Spannvorrichtung nach einem der Ansprüche 1 bis 7, **dadurch gekennzeichnet, dass** der Kolben (134) mindestens eine Durchtrittsöffnung aufweist, durch welche ein Betätigungsfluid durch den Kolben (134) hindurch zu dem Zwischenkolben (174) gelangen kann.

9. Spannvorrichtung nach einem der Ansprüche 1 bis 8, **dadurch gekennzeichnet, dass** mindestens eines der Verstärkungselemente (190) als eine Verstärkungskugel (194) ausgebildet ist.

10. Spannvorrichtung nach einem der Ansprüche 1 bis 9, **dadurch gekennzeichnet, dass** die Spannvorrichtung (100) mindestens 10, insbesondere mindestens 15, besonders bevorzugt mindestens 20, Verstärkungselemente (190) umfasst, welche längs einer Umfangsrichtung der Längsmittelachse (140) der Spannvorrichtung (100) aufeinander folgen.

11. Spannvorrichtung nach einem der Ansprüche 1 bis 10, **dadurch gekennzeichnet, dass** die Spannvorrichtung (100) einen Zuführpfad für ein Betätigungsfluid umfasst, durch welchen das Betätigungsfluid der dem Kolben (134) abgewandten Seite des Zwischenkolbens (174) zuführbar ist.

12. Spannvorrichtung nach einem der Ansprüche 1 bis 11, **dadurch gekennzeichnet, dass** die Vorspannvorrichtung mehrere Federelemente (170a, 170b) umfasst, welche längs einer Umfangsrichtung der Längsmittelachse (140) der Spannvorrichtung (100) aufeinander folgen.

13. Spannvorrichtung nach einem der Ansprüche 1 bis 12, **dadurch gekennzeichnet, dass** mindestens eines der Verriegelungselemente (136) als eine Verriegelungskugel (254) ausgebildet ist.

14. Spannvorrichtung nach einem der Ansprüche 1 bis 13, **dadurch gekennzeichnet, dass** mindestens eines der Verriegelungselemente (136) als ein Torus-Segment ausgebildet ist.

## Claims

1. Clamping device for clamping a clamping bolt (128) arranged on a workpiece or on a workpiece support (126), wherein the clamping device (100) comprises locking elements (136), a piston (134) for moving the locking elements (136) toward a longitudinal central axis (140) of the clamping device (100), a first housing part (112) and a second housing part (116), and a biasing device for biasing the piston (134) into a clamping position of the piston (134),
wherein the biasing device comprises an intermediate piston (174), which moves in the same direction as the piston (134) at least in sections when the piston (134) moves from a release position into the clamping position,
and wherein the clamping device (100) comprises reinforcing elements (190), which transmit at least a portion of the biasing force from the intermediate piston (174) to the piston (134),
**characterized in that**
the reinforcing elements (190) abut simultaneously against the intermediate piston (174), against the piston (134), and against the first housing part (112) at least at times.

2. Clamping device in accordance with Claim 1, **characterized in that** the reinforcing elements (190) move in parallel with the movement of the piston (134) at least in sections when the piston (134) moves from the release position into the clamping position.

3. Clamping device in accordance with either of Claims 1 or 2, **characterized in that** the reinforcing elements (190) move in parallel with the longitudinal central axis (140) of the clamping device (100) at least in sections when the piston (134) moves from the release position into the clamping position.

4. Clamping device in accordance with any one of Claims 1 to 3, **characterized in that** the reinforcing elements (190) move in a radial direction of the longitudinal central axis (140) of the clamping device (100) at least in sections when the piston (134) moves from the release position into the clamping position.

5. Clamping device in accordance with any one of Claims 1 to 4, **characterized in that** the reinforcing elements (190), in the clamping position of the piston (134), are accommodated at least partially in a recess (202) on a peripheral face (200) of the first housing part (112) of the clamping device (100).

6. Clamping device in accordance with any one of Claims 1 to 5, **characterized in that** the intermediate piston (174) is displaceably guided on the piston (134).

7. Clamping device in accordance with any one of Claims 1 to 6, **characterized in that** the intermediate piston (174) is spaced at a distance from the piston (134) in the axial direction of the clamping device (100) at least at times.

8. Clamping device in accordance with any one of Claims 1 to 7, **characterized in that** the piston (134) has at least one through-opening through which an actuating fluid is able to travel through the piston (134) to the intermediate piston (174).

9. Clamping device in accordance with any one of Claims 1 to 8, **characterized in that** at least one of the reinforcing elements (190) is configured as a reinforcing ball (194).

10. Clamping device in accordance with any one of Claims 1 to 9, **characterized in that** the clamping device (100) comprises at least 10, in particular at least 15, particularly preferably at least 20, reinforcing elements (190), which succeed one another along a circumferential direction of the longitudinal central axis (140) of the clamping device (100).

11. Clamping device in accordance with any one of Claims 1 to 10, **characterized in that** the clamping device (100) comprises a supply path for an actuating fluid, through which the actuating fluid is suppliable to the side of the intermediate piston (174) facing away from the piston (134).

12. Clamping device in accordance with any one of Claims 1 to 11, **characterized in that** the biasing device comprises a plurality of spring elements (170a, 170b), which succeed one another along a circumferential direction of the longitudinal central axis (140) of the clamping device (100).

13. Clamping device in accordance with any one of Claims 1 to 12, **characterized in that** at least one of the locking elements (136) is configured as a locking ball (254).

14. Clamping device in accordance with any one of Claims 1 to 13, **characterized in that** at least one of the locking elements (136) is configured as a torus segment.

## Revendications

1. Dispositif de serrage pour serrer un boulon de serrage (128) disposé sur une pièce à usiner ou sur un support de pièce à usiner (126), dans lequel le dispositif de serrage (100) comprend des éléments de verrouillage (136), un piston (134) pour déplacer les éléments de verrouillage (136) vers un axe médian longitudinal (140) du dispositif de serrage (100), une première partie de boîtier (112) et une seconde partie de boîtier (116) et un dispositif de précontrainte pour serrer le piston (134) dans une position de serrage du piston (134),
dans lequel le dispositif de précontrainte comprend un piston intermédiaire (174) qui, lors d'un mouvement du piston (134) d'une position de libération dans la position de serrage, se déplace au moins par sections dans la même direction que le piston (134),
et dans lequel le dispositif de serrage (100) comprend des éléments de renfort (190) qui transmettent au moins une partie de la force de précontrainte du piston intermédiaire (174) au piston (134),
**caractérisé en ce**
**que** les éléments de renfort (190) reposent au moins temporairement simultanément contre le piston intermédiaire (174), contre le piston (134) et contre la première partie de boîtier (112).

2. Dispositif de serrage selon la revendication 1, **caractérisé en ce que** les éléments de renfort (190) se déplacent lors du mouvement du piston (134) de la position de libération dans la position de serrage au moins par sections parallèlement au mouvement du piston (134).

3. Dispositif de serrage selon l'une quelconque des revendications 1 ou 2, **caractérisé en ce que** les éléments de renfort (190) se déplacent lors du mouvement du piston (134) de la position de libération dans la position de serrage au moins par sections parallèlement à l'axe médian longitudinal (140) du dispositif de serrage (100).

4. Dispositif de serrage selon l'une quelconque des revendications 1 à 3, **caractérisé en ce que** les éléments de renfort (190) se déplacent lors du mouvement du piston (134) de la position de libération dans la position de serrage au moins par sections dans une direction radiale de l'axe médian longitudinal (140) du dispositif de serrage (100).

5. Dispositif de serrage selon l'une quelconque des revendications 1 à 4, **caractérisé en ce que** les éléments de renfort (190) dans la position de serrage du piston (134) sont logés au moins partiellement dans un évidement (202) sur une surface périphérique (200) de la première partie de boîtier (112) du dispositif de serrage (100).

6. Dispositif de serrage selon l'une quelconque des revendications 1 à 5, **caractérisé en ce que** le piston intermédiaire (174) est guidé de manière coulissante sur le piston (134).

7. Dispositif de serrage selon l'une quelconque des revendications 1 à 6, **caractérisé en ce que** le piston intermédiaire (174) est éloigné du piston (134) au moins temporairement dans la direction axiale du dispositif de serrage (100).

8. Dispositif de serrage selon l'une quelconque des revendications 1 à 7, **caractérisé en ce que** le piston (134) présente au moins un orifice de passage par lequel un fluide d'actionnement peut parvenir au piston intermédiaire (174) à travers le piston (134).

9. Dispositif de serrage selon l'une quelconque des revendications 1 à 8, **caractérisé en ce qu'**au moins un des éléments de renfort (190) est réalisé en tant que bille de renfort (194).

10. Dispositif de serrage selon l'une quelconque des revendications 1 à 9, **caractérisé en ce que** le dispositif de serrage (100) comprend au moins 10, en particulier au moins 15, de manière particulièrement préférée au moins 20, éléments de renfort (190) qui se suivent l'un l'autre le long d'une direction circonférentielle de l'axe médian longitudinal (140) du dispositif de serrage (100).

11. Dispositif de serrage selon l'une quelconque des revendications 1 à 10, **caractérisé en ce que** le dispositif de serrage (100) comprend un chemin d'alimentation pour un fluide d'actionnement par lequel le fluide d'actionnement est acheminable vers le côté du piston intermédiaire (174) opposé au piston (134).

12. Dispositif de serrage selon l'une quelconque des revendications 1 à 11, **caractérisé en ce que** le dispositif de précontrainte comprend plusieurs éléments ressorts (170a, 170b) qui se suivent l'un l'autre le long d'une direction circonférentielle de l'axe médian longitudinal (140) du dispositif de serrage (100).

13. Dispositif de serrage selon l'une quelconque des revendications 1 à 12, **caractérisé en ce qu'**au moins un des éléments de verrouillage (136) est réalisé en tant que bille de verrouillage (254).

14. Dispositif de serrage selon l'une quelconque des revendications 1 à 13, **caractérisé en ce qu'**au moins un des éléments de verrouillage (136) est réalisé en tant que segment torique.
